# EUROPÄISCHE PATENTSCHRIFT

(11) **EP 3 694 779 B1**
(45) Veröffentlichungstag und Bekanntmachung des Hinweises auf die Patenterteilung: **13.12.2023**
(21) Anmeldenummer: 18788665.0
(22) Anmeldetag: 09.10.2018
(51) Int. Cl.: B64F 1/20

(54) **VORRICHTUNG ZUR BEFEUERUNG VON START- UND LANDEBAHNEN SOWIE VON TAXIWAYS AN FLUGHÄFEN**
DEVICE FOR LIGHTING TAKE-OFF AND LANDING RUNWAYS AND TAXIWAYS AT AIRPORTS
DISPOSITIF DE BALISAGE DE PISTES DE DÉCOLLAGE ET D'ATTERRISSAGE AINSI QUE DE VOIES DE CIRCULATION DANS DES AÉROPORTS

(30) Priorität: 09.10.2017 DE 102017009323
(43) Veröffentlichungstag der Anmeldung: 19.08.2020
(73) Patentinhaber: iAd Gesellschaft für Informatik, Automatisierung und Datenverarbeitung mbH, 90613 Grosshabersdorf (DE)
(72) Erfinder: HAMPEL, Hermann, 90613 Grosshabersdorf (DE); HAMPEL, Johannes, 90613 Grosshabersdorf (DE); PIEGER, Markus, 91301 Forchheim (DE)
(74) Vertreter: Dreykorn-Lindner, Werner
(86) Internationale Anmeldenummer: PCT/EP2018/025264
(87) Internationale Veröffentlichungsnummer: WO 2019/072417

(56) Entgegenhaltungen:
- WO-A1-99/03729
- CH-A- 468 593
- FR-A1- 2 790 443
- US-A1- 2004 232 624

## Beschreibung

Die Erfindung betrifft, gemäß Patentanspruch 1, eine Vorrichtung zur Befeuerung der Start- und Landebahnen sowie der Taxiway an Flughäfen mit einer Vielzahl von Feuern, welche jeweils einen Gehäuse-Deckel mit einer Lichtdurchtrittsöffnung, als Lichtquelle mindestens eine lichtemittierende Diode und ein komplementär zur Form der Lichtdurchtrittsöffnung ausgestaltetes Prisma als Optik und einen zwischen Gehäuse-Deckel und einem daran befestigten Einsatz angeordneten Dichtungsring aufweist.

Auf dem technischen Gebiet der Beleuchtungstechnik sind elektrische Einrichtungen mit Serienstromkreisen, insbesondere in der Flugfeldbefeuerung und in der Straßenbeleuchtung seit langem bekannt. Befeuerungsanlagen bei Flugplätzen dienen dazu, Flugzeuge beim Start, bei der Landung und beim Rollen der Flugzeuge auf dem Flugplatz zu leiten, vor allem bei Nacht und schlechter Sicht. Dies sind Befeuerungselemente, wie die Markierungen der Start- und Landebahnen, die Anflugbefeuerung, Gleitwinkelfeuer, Schwellenfeuer, Start- und Landbahnleuchten, Taxiway Feuer, Kennfeuer, Gefahrenfeuer, Hindernisfeuer und die Markierungen und Wegweiser der Vorfelder und Rollbahnen. Bei großen Flugplätzen erstrecken sich solche Befeuerungsanlagen über mehrere Kilometer, so dass entsprechend ausgedehnte Kabelnetze erforderlich sind. Um trotz der kilometerlangen Leitungen nicht mit störenden Leistungsabfällen konfrontiert zu sein, werden meist Serienkreise verwendet, wobei die Speisung der Leuchtmittel mittels Lampentransformatoren vom Serienkabel entkoppelt wird, um beim Ausfall eines Leuchtmittels den Serienkreis nicht zu unterbrechen. Weiterhin erfolgt die Speisung des Serienkabels gemeinsam zentral gesteuert mittels Konstantstromregler, so dass Lichtsignale mit schwankender Helligkeit, insbesondere durch Ausfall von Leuchtmitteln, vermieden werden. Weiterhin wird im Flughafenbereich häufig eine automatische Lampenausfallerkennung eingesetzt.

Ein Verfahren und eine Vorrichtung zur Lampenausfallmeldung und zur Konstanthaltung des Serienstromkreises von Befeuerungsanlagen auf Flugplätzen oder dgl. ist aus der DE 197 50 560 A1 bekannt. Als Verbraucherkreis mit in Serie geschalteten Lampentransformatoren zur Versorgung der Lampen dient ein sekundärseitiger Serienkreis eines Speisetransformators, der mittels einer eine übergeordnete Steuerung aufweisenden Konstantstromregelung geregelt wird. Der Ist-Strom im sekundärseitigen Serienkreis und die Ist-Spannung auf der Primärseite des Speisetransformators des sekundärseitigen Serienkreises werden gemessen und es wird jeweils ein entsprechendes Messsignal der übergeordneten Steuerung zugeführt. In der übergeordneten Steuerung wird aus einem dem Ist-Strom im sekundärseitigen Serienkreis entsprechenden Messsignal und einem der Ist-Spannung auf der Primärseite des Speisetransformators entsprechenden Messsignal ein der Induktivität des sekundärseitigen Serienkreises entsprechender Wert ermittelt. Weiterhin wird der für die Induktivität des sekundärseitigen Serienkreises ermittelte Wert mit in der übergeordneten Steuerung abgespeicherten Vergleichswerten für die Induktivität des sekundärseitigen Serienkreises verglichen, die bei vollständig intaktem und in Betrieb befindlichem sekundärseitigen Serienkreis und bei Abschaltung einer und/oder mehrerer Lampen des sekundärseitigen Serienkreises ermittelt worden sind. Bei dieser Ausführungsform übernimmt die übergeordnete Steuerung der Konstantstromregelung zusätzlich die Mess- und Auswerteaufgaben einer Lampenausfallüberwachung. Im Betrieb der Konstantstromregelung bzw. des Serienkreises kann dann der während dieses Betriebs ermittelten Induktivität ein aus zumindest drei Vergleichs-Induktivitätswerten durch lineare Inter- und Extrapolation für jede Stromstufe errechneter, ganzzahliger Lampenausfallwert zugeordnet werden. Weiterhin können bei Vor-Ort-Betrieb mittels dezentraler Reglereinrichtung (d.h. Einzellampensteuerung) die Lampen der Befeuerungsanlage bzw. der zentral angeordnete Speisetransformator, dessen Sekundärseite einen Überspannungs- oder Blitzschutz aufweist, ein- und ausgeschaltet werden.

Weiterhin sind Einzellampensteuerung für Befeuerungsanlagen auf Flugplätzen und dgl. bekannt. Beispielsweise ist aus der DE 101 44 929 A1 eine Einzellampensteuerung mit Einzellampensteuermodule bekannt, welche jeweils den Betrieb von Lampen der Befeuerungsanlage steuern und über Lampentransformatoren an einen Serienstromkreis der Befeuerungsanlage angeschlossen sind, und mit einem Befeuerungsleitsystem, an das die Einzellampensteuermodule angeschlossen sind. Um beim Datenverkehr zwischen dem Befeuerungsleitsystem und den Einzellampensteuermodulen eine möglichst optimale Datenkopplung bei möglichst geringer Signaldämpfung zu erreichen, wird eine separate Datenverbindung vorgeschlagen, mittels der die Einzellampensteuermodule an das Befeuerungsleitsystem angeschlossen sind. Weiterhin weist jedes Einzellampensteuermodul einen Leistungskanal auf, der eingangsseitig über einen FAA-Stecker an den Lampentransformator und ausgangsseitig über einen FAA-Stecker an die Lampe angeschlossen ist. Weiterhin ist im Leistungskanal jedes Einzellampensteuermodul eingangsseitig ein Überspannungsschutzelement zum Serienstromkreis und ausgangsseitig ein Blitzschutzelement zur Lampe angeordnet. Weiterhin weist jedes Einzellampensteuermodul im Steuerkanal ein Signalerfassungselement auf, mittels dem der Lampenzustand, insbesondere der Lampenstrom erfassbar ist. Schließlich weist jedes Einzellampensteuermodul im Steuerkanal einen Mikrocontroller auf, mittels dem der Leistungsteil des Leistungskanals ansteuerbar und Meldungs- und Messwertdaten vom Signalerfassungselement aufbereitbar sind. Der Mikrocontroller des Steuerkanals steuert den Leistungsteil des Leistungskanals so an, dass ein Einschalten und Ausschalten der Lampe über eine Schaltrampe erfolgt. Der Lampenzustand ist mittels des Mikrocontrollers des Steuerkanals nach einem Zuschalten des Serienstromkreises bis zum Empfang des ersten Telegramms und bei einem Ausfall eines LWL-Busses in Abhängigkeit von einer eingestellten Parametrierung des Einzellampensteuermoduls steuerbar. In einer solchen Einzellampensteuerung wird der Betriebszustand des Leuchtmittels permanent erfasst und überwacht. Im Falle eines Leuchtmittelausfalls merkt sich der Mikrocontroller dies und schließt dann den Lampentransformator kurz. Damit sind gefährlich hohe Spitzen eliminiert. Dieses Verfahren setzt jedoch einen Kommunikationskanal voraus, über welchen der Mikrocontroller den Leuchtmittelausfall melden kann, wobei sicher zu stellen ist, dass ein Ausfall eines oder mehrerer Leuchtmittel nicht zum Ausfall eines ganzen Serienstromkreises führt.

Weiterhin ist aus der WO 2013/170 894 A1 eine Lampen-Emulationsschaltung für wechselstromgespeiste Flughafenbefeuerungsanlagen zur Nachbildung (Emulierung) des Ausfallens einer LED-Lampe bekannt. Im Einzelnen ist die Lampen-Emulationsschaltung zwischen einem Lampentransformator und der LED-Lampenschaltung eingesetzt. Der Lampentransformator ist mit seiner Primärwicklung mit einer Konstantstromversorgung in Reihe geschaltet und liefert an seiner Sekundärwicklung einen Lampenstrom. Ferner weist die Lampen-Emulationsschaltung Mittel zum Messen der Spannung an der Sekundärwicklung des Lampentransformators und weitere Mittel zum Abschalten der LED-Lampenschaltung von dem Lampentransformator auf, wenn die Spannung an der Sekundärwicklung des Lampentransformators einen vorbestimmten Wert überschreitet. Insbesondere weist die Lampen-Emulationsschaltung einen Gleichrichter auf, der mit einem Filter verbunden ist, um die Spannung über dem Lampentransformator zu bestimmen. Dieser ist ferner mit einer Relaisspule verbunden, die einen Kontakt zum Trennen der LED-Lampenschaltung vom Lampentransformator öffnet, wenn die Spannung über dem Lampentransformator einen vorbestimmten Wert überschreitet. Durch vollständiges Trennen des LED-Lampenschaltkreises vom Lampentransformator wird eine ausgefallene Lampe emuliert (nachgebildet). Wenn der LED-Lampenstromkreis vom Lampentransformator getrennt ist, hat der Lampentransformator an seiner Sekundärseite keine Last und geht so in die Sättigung, wie er es bei einer ausgeschalteten Lampe ausführen würde. Daher detektieren Lampenfehlererfassungsmittel, wie sie aus dem Stand der Technik bekannt sind, zuverlässig einen Ausfall. In einer Ausführungsform ist ein Rückstellschalter parallel zur Sekundärwicklung des Lampentransformators geschaltet. Vorzugsweise ist es ein federbelasteter, normalerweise offener Schalter, der manuell betätigt werden kann, um seinen Kontakt zu schließen und somit einen Kurzschluss der Sekundärwicklung des Lampentransformators zu verursachen. Dies führt zu einem Rücksetzen der Lampen-Emulationsschaltung.

Um eine Befeuerungsvorrichtung bereitzustellen, deren Befeuerungseinheiten auch bei Verwendung von Leuchtdioden als Lichtquellen automatisch auf ihre tatsächliche Lichtaussendung überwacht werden können, ist in der DE 10 2008 049 553 A1 eine Befeuerungsvorrichtung vorgeschlagen, bei welcher die Befeuerungseinheiten jeweils eine Messeinrichtung zur Erfassung von außen einfallenden Lichts aufweist, wobei die Messeinrichtung der zweiten Befeuerungseinheit derart ausgebildet ist, dass sie von der Lichtquelle der ersten Befeuerungseinheit ausgesandtes Licht erfasst. Indem die Messeinrichtung für von einer ersten Befeuerungseinheit ausgesandtes Licht außerhalb dieser Befeuerungseinheit angeordnet ist, wird durch die Messeinrichtung der tatsächliche Lichtaustritt aus der Befeuerungseinheit gemessen. Hierzu wird der Anteil des Lichts, der von der Lichtquelle erzeugt wird, der dann gegebenenfalls optische Komponenten der ersten Befeuerungseinheit durchläuft, und der schließlich nach Verlassen der ersten Befeuerungseinheit am Ort der Messeinrichtung eintrifft und von dieser empfangen wird, gemessen. Der Ort der Messeinrichtung ist derjenige der zweiten, beispielsweise der benachbarten Befeuerungseinheit. Auf diese Weise kann durch eine Vielzahl an baugleichen Befeuerungseinheiten mit integrierter Messeinrichtung eine Befeuerungsvorrichtung installiert werden, die eine Kette von sich gegenseitig überwachenden Befeuerungseinheiten aufweist. Die Überwachung der tatsächlichen Lichtaussendung erfolgt dabei automatisch, also ohne das Erfordernis von am Ort der Befeuerungseinheit arbeitendem Wartungspersonal und ohne den Einsatz zusätzlicher mobiler Messgeräte. In einer bevorzugten Ausführungsform weist die Messeinrichtung einen Lichtsensor zur Ermittlung von Intensität und/oder Farbe des einfallenden Lichts auf, welcher eine Optikvorrichtung zur Bündelung und/oder Filterung des von außen einfallenden Lichts vorgeschaltet ist. Der Lichtsensor kann als Fotodiode, Fotowiderstand, Fotozelle oder dergleichen ausgebildet sein und ist auf die Wellenlängen des zu messenden Lichts, welches von der Leuchtdiode der ersten Befeuerungseinheit ausgesandt wird, eingestellt. Die Optikvorrichtung bündelt das empfangene Licht, damit ein Messsignal mit ausreichender Intensität erzeugt wird; ferner filtert sie das empfangene Licht, damit möglichst wenig Fremdlicht auf den Lichtsensor fällt. Weiterhin weist die Lichtquelle eine Gruppe von ein- oder verschiedenfarbigen Leuchtdioden auf. Hierdurch kann Licht unterschiedlicher Helligkeit und/oder Farbe erzeugt werden. Mit einer Gruppe von einfarbigen Leuchtdioden wird der Lichtquelle eine Redundanz verliehen, so dass bei Ausfall einzelner Leuchtdioden nicht notwendigerweise ein Wechsel der Lichtquelle oder der Befeuerungseinheit erfolgen muss, da der Ausfall durch Nachregelung der Helligkeit der noch intakten Leuchtdioden kompensiert werden kann. Mit einer Gruppe verschiedenfarbiger Leuchtdioden lässt sich durch gezieltes Ansteuern der Leuchtdioden unterschiedlich farbiges Licht der Befeuerungseinheit mischen. Es wird also die Wartungsfreundlichkeit von Befeuerungsvorrichtungen erhöht und die Typenvielfalt der Befeuerungseinheiten verringert. Weiterhin weisen die Befeuerungseinheiten jeweils eine Optikeinrichtung zur Strahlformung des von der Lichtquelle ausgesandten Lichts auf. Das von der Lichtquelle erzeugte Licht tritt durch eine Optikeinrichtung, welche Linsen, Spiegel und Prismen umfassen kann, um zu einem Strahl mit durch Normen vorgegebenen Eigenschaften hinsichtlich seiner raumwinkelbezogenen Intensitätsverteilung geformt zu werden. Weiterhin weisen die Befeuerungseinheiten jeweils eine Regeleinrichtung mit einem Lichtsensor zur Erfassung von Intensität und/oder Farbe des von ihrer Lichtquelle ausgesandten Lichts und mit einer mit diesem verbundenen Steuereinheit zur Ansteuerung der Lichtquelle auf. Dieser interne fotometrische Sensor misst das Licht unmittelbar nach seiner Erzeugung durch die Leuchtdioden hinsichtlich seiner Farbe und Helligkeit, also bevor das Licht die Befeuerungseinheit verlässt und gegebenenfalls bevor das Licht die Optikeinrichtung passiert. Zum einen entsteht hierdurch eine zusätzliche Überwachungsmöglichkeit für das auszusendende Licht, zum anderen werden die Messwerte der Regeleinrichtung zugeführt, in welcher nach einem Soll-Ist-Vergleich über die Steuereinrichtung die Bestromung der Leuchtdioden zur Regulierung von Helligkeit und Farbe angesteuert werden kann. Weiterhin weisen die Befeuerungseinheiten jeweils eine Versorgungseinheit auf, die zur Energieversorgung über eine Leitung mit einer zentralen Energieversorgungseinrichtung verbunden sind. Die Versorgungseinheiten dienen der Spannungsversorgung der jeweiligen Befeuerungseinheit und sind über eine Zweidrahtleitung an eine zentrale Energieversorgungseinrichtung gekoppelt. Vorzugsweise weisen die Befeuerungseinheiten jeweils eine Kommunikationseinheit auf, die zur Datenübertragung mit einer zentralen Kommunikationseinrichtung verbunden sind. Über die Kommunikationseinheiten in den Befeuerungseinheiten werden die Messwerte der Messeinrichtungen und der Regeleinrichtungen an die zentrale Kommunikationseinrichtung übertragen. Damit können zentral zwei unterschiedliche Messwerte über das ausgesandte Licht einer Befeuerungseinheit miteinander und mit einem abgeglichenen Betriebszustand verglichen werden. Dies erlaubt Fehlfunktionen im Lichtaustritt durch Defekte oder Verschmutzungen automatisch unter Identifikation von Nummer und Einbauort der betreffenden Befeuerungseinheit zu erfassen. In der zentralen Kommunikationseinrichtung kann zu Wartungszwecken eine entsprechende Zustandsmeldung generiert werden. Da die Kommunikation bidirektional ausgebildet ist, können von der zentralen Kommunikationseinrichtung umgekehrt Kommandos zum Ein- oder Ausschalten oder zur Helligkeits- oder Farbeinstellung an die Befeuerungseinheiten übertragen werden. Vorzugsweise sind die Kommunikationseinheiten der Befeuerungsvorrichtung mit der zentralen Kommunikationseinrichtung über die Energieversorgungsleitung zur Ausbildung eines Feldbusses für die Datenübertragung verbunden. Wenn über die Zweidrahtleitung, die zur Übertragung von elektrischer Energie an die Befeuerungseinheiten verwendet wird, auch hochfrequente Datensignale übertragen werden, können für die Datenkommunikation Leitungslängen von mindestens bis zu 10 km bei bis zu 200 angeschlossenen Befeuerungseinheiten verwirklicht werden. Dabei überschreitet die speisende Spannung einschließlich kurzzeitiger Spannungsspitzen nicht 600 V. Dies ermöglicht die Verwendung von Niederspannungskabeln der Klasse unter 1000 V. Der Einsatz von Niederspannungsleitungen und -bauelementen hat erhebliche Sicherheits- und Kostenvorteile gegenüber den bekannten Hochspannungskabeln mit Betriebsspannungen bis 5000 V mit Prüfspannungen bis zu 20 kV. Außerdem überschreitet die Leistungsfähigkeit der als Feldbus in Zweidrahttechnik ausgebildeten Leitung die Kommunikation auf Serienstromkreisen, welche eine Baudrate von maximal 100 kb/sec aufweist, bei weitem. Insbesondere sind die Lichtquellen jeweils zur kontinuierlichen oder intermittierender Aussendung von Licht und die Messeinrichtungen zur dessen Erfassung ausgebildet. Damit sind als Befeuerungseinrichtungen sowohl stetig brennende Feuer in Unterflur- oder Überflurbauweise als auch Blitzfeuer in traditioneller Hochspannungstechnik, wobei die Lichtsensoren an die relevanten Wellenlängen des ausgesandten Lichts anzupassen sind, sowie auch in Leuchtdiodentechnik verwendbar. Im Einzelnen weist jede Befeuerungseinheit ein topfförmiges Gehäuse auf, welches mittig in eine in der Landebahn vorgesehene Vertiefung eingelassen und auf Flurniveau durch einen Deckel druckdicht verschlossen ist. Im Gehäuse ist eine Leuchtdioden aufweisende Lichtquelle angeordnet, die Licht einer vorgegebenen Farbe und Helligkeit aussendet. Das von der Lichtquelle emittierte Licht durchläuft eine Optikeinrichtung, die beispielsweise ein Prisma aufweist, an dessen Basis das von der Lichtquelle emittierte Licht eintritt und durch dessen Vorderseite das Licht zu einem Strahl mit definierter, raumwinkelbezogener Intensitätsverteilung austritt. Das Licht wird unter einem flachen Winkel gegen die Horizontale ausgesandt, um einem im Landeanflug befindlichen oder rollenden Piloten die Mittellinie der Landebahn auch bei schlechten Sichtverhältnissen, insbesondere bei Nacht, zu dessen Orientierung zu markieren. Die Farbe und die Helligkeit des von den Leuchtdioden ausgesandten Lichts wird mittels eines fotometrischen Sensorelementes einer im Gehäuse angeordneten Regeleinrichtung gemessen und kann bei Bedarf, das heißt bei Abweichung von einem Sollbetriebszustand, mittels einer zur Regeleinrichtung gehörenden Steuereinrichtung nachgeregelt werden. Durch die Regelung können einzelne Leuchtdioden, deren ursprüngliche lichttechnische Eigenschaften sich durch den Betreib geändert haben, über geeignete Pulsweitenmodulation der Bestromung der intakten Leuchtdioden kompensiert werden. Bei einer Gruppe verschiedenfarbiger Leuchtdioden kann mittels der Regeleinrichtung durch Mischung die Farbe des ausgesandten Lichts eingestellt werden. Die elektrischen Verbraucher der Befeuerungseinheiten werden durch Versorgungseinheiten mit Strom versorgt, die über eine Leitung zur Übertragung elektrischer Energie mit einer zentralen Energieversorgungseinrichtung verbunden sind. Ferner umfassen die Befeuerungseinheiten Kommunikationseinheiten die zur bidirektionalen Datenübertragung an eine zentrale Kommunikationseinrichtung gekoppelt sind. Bei Befeuerungseinheiten, die Optikeinrichtungen zur Lichtabstrahlung in zwei Richtungen aufweisen, wird die sensorische Erfassung der Lichtaussendung der jeweils benachbarten Befeuerungseinheit über eine Messeinrichtung ausgeführt, die in dem der zu vermessenden Befeuerungseinheit zugewandten Prisma integriert ist. Bei Überflurfeuern wird die sensorische Erfassung der Lichtaussendung des jeweils benachbarten, in Flugrichtung hinteren Feuers über eine Messeinrichtung ausgeführt, die in der Rückseite des in Flugrichtung vorderen Feuers integriert ist. Die Messeinrichtung kann sowohl für stetig brennende Befeuerungseinheiten in Unterflur- oder Überflurbauweise als auch für Blitzfeuer in traditioneller Hochspannungstechnik bei angepasster Sensorik für die relevanten Wellenlängen des emittierten Lichts oder auch in LED-Technik verwendet werden.

Um eine Flugfeldbefeuerungsvorrichtung bereitzustellen, deren Befeuerungseinheiten auf ihre tatsächliche Lichtaussendung und damit auf die ausreichende Helligkeit des an einen Flugzeugführer abgegebenen optischen Signals überwacht werden können, ist in Weiterbildung hierzu aus der DE 10 2008 054 203 Aleine Flugfeldbefeuerungsvorrichtung bekannt, indem die Überwachungseinrichtung mindestens eine Videokamera zur Aufnahme eines digitalen Videobildes der wenigstens einen Befeuerungseinheit aufweist. Damit steht ein für die Funktionskontrolle kostengünstiges und leistungsfähiges Erfassungssystem zur Verfügung, welches das momentan von der Befeuerungseinheit abgegebene optische Signal erfasst. Durch die Aufnahme einer Befeuerungseinheit wird zu jedem Zeitpunkt erfasst, ob überhaupt ein Signal, und wenn ja, in welcher Helligkeit und/oder Farbe es tatsächlich abgegeben wird. Die Erfassung des von außen wahrnehmbaren Ist-Zustandes stellt die Grundlage für die Funktionskontrolle dar, ohne dabei die Ursache für eine mögliche Fehlanzeige kennen zu müssen. Videokameras sind geeignet, unter verschiedensten Aufnahmebedingungen - etwa bei Sonne, bei Niederschlag oder bei Nacht - digital auswertbare Videobilder von Lichtsignalen, seien es Überflurfeuer oder Unterflurfeuer, aber auch von Hinweistafeln aufzunehmen. Die Uberwachungseinrichtung kann zusätzlich zu bekannten Fehlererkennungsschaltungen oder anstelle derer verwendet werden, um im einen Fall ein redundantes System zur Fehlererkennung bereitzustellen und im anderen Fall ein kostengünstigeres. Schließlich ist die Überwachungseinrichtung modular aufgebaut, da Videokameras auf dem Flugfeld sukzessive installiert werden können; zunächst könnten beispielsweise hochsicherheitsrelevante Flugfeldsegmente, etwa die Anflugbefeuerung, die Start-/Landebahnbefeuerung und die Haltelinienbefeuerung, überwacht werden, um in einem späteren Ausbauschritt auch weitere Flugfeldsegmente, etwa die Rollwege, das Vorfeld sowie andere Bodenbewegungsbereiche, zu überwachen. In der Flugfeldbefeuerungsvorrichtung ist die mindestens eine Videokamera derart angeordnet und ausgerichtet, dass das aufgenommene Videobild eine Gruppe von mehreren Befeuerungseinheiten aufweist. Durch die Überwachung einer Gruppe von mehreren Befeuerungseinheiten kann die Anzahl der verwendeten Videokameras klein gehalten werden. Außerdem ist hierdurch eine Übersicht über eine Gruppe von funktionell zusammenhängenden Befeuerungseinheiten, beispielsweise die gesamte Anflugbefeuerung oder die gesamte Befeuerung einer Haltelinie, gewonnen werden. Die mindestens eine Videokamera ist derart angeordnet und ausgerichtet, dass das Videobild der einen oder mehreren Befeuerungseinheiten in etwa aus Blickrichtung des Flugzeugführers aufnehmbar ist. Damit bildet das aufgenommene Videobild die Sicht eines Piloten auf die Befeuerungseinheiten ab, die die optischen Signale an diesen abgeben sollen. Die Funktionskontrolle erfolgt damit aus Sicht desjenigen Beobachters, für den die Lichtsignale gedacht sind. Die Überwachungseinrichtung weist vorzugsweise eine Auswertungseinrichtung auf, in der die aufgenommenen Videobilder hinsichtlich einer von außen wahrnehmbaren Helligkeitsstufe abgebildeter Befeuerungseinheiten auf. Hierzu umfasst die Auswertungseinrichtung Speichermittel, in welchen Referenzbilder mit Befeuerungseinheiten verschiedener einstellbarer Helligkeitsstufen abgelegt sind. Ferner umfasst die Auswertungseinrichtung Vergleichsmittel zum digitalen Vergleichen aufgenommener Videobilder, mit einem Referenzbild. Die Auswahl des richtigen Referenzbildes erfolgt durch den Aufnahmezeitpunkt des von der Videokamera gelieferten Videobildes, denn der Aufnahmezeitpunkt gibt vor, welche Helligkeitsstufe von der Steuerzentrale vorgegeben bzw. geschaltet war. Vorzugsweise weist die Überwachungseinrichtung eine Anzeigeeinrichtung zur Wiedergabe aufgenommener Videobilder auf, die derart mit der Auswertungseinrichtung verbunden ist, dass die Wiedergabe eines aktuell aufgenommenen Videobildes automatisch erfolgt, sobald für eine Befeuerungseinheit eine ermittelte Helligkeitsstufe von der eingestellten Helligkeitsstufe abweicht. Die Anzeigeeinrichtung kann beispielsweise zentral, etwa im Kontrollturm oder in einer Wartungsstation des Flughafens, angeordnet sein. Ein Videobild wird von der Anzeigeeinrichtung dann automatisch wiedergegeben und damit dem Kontroll- oder Wartungspersonal zur Kenntnis gegeben, wenn wenigstens eine der aufgenommenen Befeuerungseinheiten kein optisches Signal oder ein optisches Signal abgibt, welches in Farbe und/oder Helligkeit nicht dem von einer Steuerzentrale eingestellten Helligkeitszustand entspricht. Vorzugsweise ist die Anzeigeeinrichtung der Befeuerungsvorrichtung zur Wiedergabe eines aus mehreren, von unterschiedlichen Videokameras aufgenommenen Videobildern zusammengesetzten Gesamtbildes ausgebildet. Damit können mittels der zentralen Anzeigeeinrichtung sowohl der zeitliche Verlauf ein und desselben Befeuerungsausschnittes sowie in einer Gesamtdarstellung mehrere gleichzeitig aufgenommene Videobilder wiedergegeben werden. Durch die zeitliche Entwicklung der Helligkeit einer bestimmten Befeuerungseinheit können wichtige Wartungshinweise gewonnen werden. Außerdem bildet der Gesamtüberblick über eine Vielzahl an Befeuerungseinheiten eine wichtige Entscheidungsgrundlage für mögliche Schalteingriffe des Kontrollpersonals.

Um ein Unterflurfeuer zu schaffen, das klein gebaut werden kann, eine längere Standzeit aufweist und leichter gewartet bzw. instandgesetzt werden kann, ist aus dem DE 203 09 405 U1 ein Unterflurfeuer bekannt, bei dem als Lichtquelle mindestens eine lichtemittierende Diode (LED) vorgesehen ist. Ihr Halter ist in einem geschlossenen Gehäuse angeordnet, das eine Lichtdurchtrittsöffnung sowie eine Optik enthält. Das Gehäuse ist in einer nach oben offenen Ausnehmung des Deckelteils angeordnet, vorzugsweise passend in der Ausnehmung aufgenommen, wobei die Oberseite des Gehäuses einen Teil der überfahrbaren Oberseite des Deckelteils bildet. Das die Optik und mindestens eine LED aufnehmende Gehäuse kann als Modul ausgeführt werden, das für die verschiedensten Unterflurfeuer verwendet werden kann, z. B. in einer Einfach- oder Mehrfachanordnung. Beispielsweise sind bei einer Mehrfachanordnung zwei Gehäuse auf gegenüberliegenden Seiten einer Trennwand in entsprechenden Ausnehmungen aufgenommen und haben eine Abstrahlrichtung zu gegenüberliegenden Seiten unter einem vorgegebenen Winkel zum Untergrund. Dabei bildet die Oberseite des Gehäuses einen Teil der Oberseite des deckelartigen Verschlusses für das Unterflurfeuer. Vorzugsweise ist die Oberseite des Gehäuses plan, wobei die Oberseite des Deckelteils im Anschluss an das Gehäuse abgeschrägt zum Rand abfällt, um einen weichen Übergang für das überfahrende Rad zu bilden. Der Austritt des Strahls aus dem Gehäuse über die Lichtaustrittsöffnung ist innerhalb des Deckelteils gestützt, wobei der Lichtstrahl über eine Vertiefung im Deckelteil in einem vorgegebenen Winkel austreten kann. Dadurch ist zwar eine Lücke gebildet, in deren Bereich das überfahrende Rad keine Abstützung erfährt. Diese Lücke ist jedoch relativ schmal, so dass beim Überfahren keine Gefährdung des Gehäuses bzw. seiner Optik und der LED stattfinden. Nach einer Ausgestaltung der Erfindung ist das Gehäuse quaderförmig, wobei die Lichtaustrittsöffnung z. B. in einer Schrägung der Oberseite des Gehäuses vorgesehen ist und die Lichtdurchtrittsöffnung passend ein Prisma als Optik aufzunehmen in der Lage ist. Nach einer anderen Ausgestaltung ist das Gehäuse vorzugsweise aus einem Gehäuseunterteil und einem Gehäuseoberteil gebildet, die fest und dicht miteinander verbindbar sind, beispielsweise durch Verschraubung, Verklebung oder durch Verschweißung. Das Gehäuse ist nach einer weiteren Ausgestaltung vorzugsweise durch Verschraubung in der Ausnehmung des Deckelteils befestigt. Diese Befestigung sieht vorzugsweise die Anordnung von Schrauben an der Unterseite des Deckelteils vor, damit über Schraubenlöcher keine Feuchtigkeit in das Innere des Gehäuses eindringen kann. Bei der Installation eines Unterflurfeuers nach dem DE 203 09 405 U1 kann das Gehäuse zunächst mit Bestückung vorgefertigt werden, wobei Prisma und LED montiert und anschließend Gehäuseober- und Gehäuseunterteil abgedichtet ( indem in den aneinanderstoßenden Flächen Dichtungen eingelassen sind) miteinander verbunden werden. Das Gehäuseunterteil erhält eine Durchführung für ein Kabel zur Versorgung der mindestens einen LED. Ein Umformteil, das eine Versorgung der LED mit der gewünschten Spannung und dem gewünschten Strom bereitstellt, ist vorzugsweise in dem topfförmigen Einsatz, dessen Oberkante mit der Ebene des Untergrundes abschließt, aufgenommen (d.h. im Innenraum unterhalb des Deckelteils). Der topfförmige Einsatz bietet ausreichend Platz für eine ausreichende Kabellänge, die ein Abheben des Deckelteils zusammen mit den in Ausnehmungen des Deckelteils eingebrachten (zwei) Gehäuse (mit LED und Optik, vorzugsweise Prisma) vom topfförmigen (zylindrischen) Einsatz erlaubt, bevor eine Steckverbindung für die Versorgungsleitung getrennt wird, aufweist. Ein im Durchmesser kleinerer zylindrischer Abschnitt des Deckelteils ist passend in den Einsatz eingesetzt und mittels einer Dichtung, die in einer Ringnut eingelassen ist, abgedichtet. Die mindestens eine LED ist vorzugsweise auf einer handelsüblichen Platine angebracht und außerdem mit einer geeigneten Optik versehen. Eine derartig bestückte Platine wird vorzugsweise im Unterteil des Gehäuses mittels Verschraubung festgelegt, beispielsweise gegen die Vorderseite der Rückwand des Gehäuseunterteils verschraubt. Das Prisma im Gehäuse ist geometrisch an die Bedingungen des Unterflurfeuers angepasst, insbesondere länglich ausgeführt und mit Hilfe eines Rahmens, der im Gehäuse festgelegt ist, gehalten. Alternativ weist das Prisma eine umlaufende Schulter auf, welche gegen eine umlaufende Schulter in der Lichtaustrittsöffnung anliegt, wobei der Rahmen dafür sorgt, dass die Schultern gegeneinander in Eingriff bleiben. Zwischen dem Rahmen bzw. dem Prisma und der mindestens einen LED ist ein Abstand eingehalten, der bei geringfügigen Verformungen, die beim Überfahren des Unterflurfeuers auftreten können, eine Beschädigung der LED verhindert.

Weiterhin ist aus der CH 468 593 A eine Startbahnleuchte mit flachem überrollbarem Gehäuse mit einem Gehäuseunterteil, auf welchem ein mit der Startbahnebene annähernd bündig abschließender, die elektrischen und optischen Einbauteile tragender Gehäuseoberteil aufgesetzt ist, der zwei gegenüberliegende, je ein lichtbrechendes Prisma enthaltende Lichtaustrittsöffnungen hat, an die je eine Vertiefung anschließt, durch welche die Lichtstrahlen, die von einer mittig zwischen den Prismen angeordneten Lampe ausgehen, unter einem kleinen Winkel zur Startbahnebene austreten. Zum Schutz dieses optischen Systems gegen statische und dynamische Beanspruchungen ist es erforderlich, das Gehäuse der Leuchte, insbesondere aber den überrollbaren Gehäuseoberteil, als schweres widerstandsfähiges Metallgussstück auszubilden. Um eine durchgebrannte Lampe auszuwechseln, musste eine zeitraubende Montagearbeit durchgeführt werden. Zur Verbesserung ist hierfür im Einzelnen in der Druckschrift D1 vorgesehen, dass der Gehäuseoberteil zur Halterung einer mit ihrer Längsachse in der Vertikalen angeordneten Quarz-Jod-Glühlampe eingerichtet ist und eine startbahnseitige verschließbare Öffnung hat, durch welche die Lampe in Richtung zur Startbahn austauschbar ist, wobei der Lampe ein den Gehäuseoberteil und die Einbauteile nach unten abdeckender, zur Parallelrichtung der Lichtstrahlen dienender Reflektor zugeordnet ist. Bei dieser Startbahnleuchte ist durch die Verwendung des Reflektors im Zusammenwirken mit den übrigen optischen Bauelementen erreicht, dass eine maximale Zahl von der Lampe ausgesandter Lichtstrahlen durch die Prismen nach außen gestrahlt wird. Bei einer maximalen Lichtstärke sind die Strahlungsverluste besonders klein. Zugleich ist ein einfaches, schnelles und genaues Auswechseln der Lampe gesichert, wobei die Lampe in ihrer Höhenlage und Richtung innerhalb des optischen Systems genau festgelegt ist. Der Gehäuseoberteil hat zwei gegenüberliegende, je ein lichtbrechendes Prisma enthaltende Lichtaustrittsöffnungen, an die je eine Vertiefung anschließt. Jede Vertiefung hat einen etwa horizontalen Boden, der mit der Startbahnebene bündig verläuft. Durch die Prismen und die Vertiefungen treten die Lichtstrahlen unter einem kleinen Winkel zur Startbahnebene aus. Rippen geben dem Gehäuseoberteil eine größere Stabilität und verhindern, dass die Messer von Schneepflügen und Flugzeugschwanzhaken die Prismen unmittelbar berühren. Rippen verlängerungsteile erstrecken sich in Richtung der Rippen und greifen über die Außenflächen der Prismen hinaus. Diese Rippen verlängerungsteile sind am Gehäuseoberteil durch Schrauben befestigt und dienen zur Halterung der Prismen in festgelegten Stellungen innerhalb dieses Gehäuseoberteils. Jedes Prisma ist in der Öffnung des Gehäuseoberteils durch eine Dichtung aus Silicongummi abgedichtet. Der Gehäuseoberteil ist zur Halterung einer mit ihrer Längsachse in der Vertikalen angeordneten Quarz-Jod-Glühlampe eingerichtet und hat eine startbahnseitige verschließbare Öffnung, durch welche die Lampe in Richtung zur Startbahn austauschbar ist. An der dem Gehäuseunterteil zugewandten Seite des ringförmig geformten Gehäuseoberteils ist eine Tragplatte befestigt, an der die Lampe, der Reflektor und die Linsen gehaltert sind. Durch die Verbindung zwischen dem Gehäuseoberteil, der eine schüsselförmig eingezogene Unterseite hat, und dem Reflektor entsteht ein Hohlraum, dessen Oberseite von dem Gehäuseoberteil und dessen Unterseite vom Reflektor gebildet ist. Dieser zur Aufnahme optischer und elektrischer Einbauteile dienende Hohlraum ist durch eine Dichtungsleiste abgedichtet, die sich zwischen einem Flansch des Reflektors und der Unterseite des Gehäuseoberteils erstreckt. Eine mit Gewinde versehene Kappe greift in den oberen Teil der Durchlassöffnung ein. Nach Herstellung einer elektrischen Verbindung der Lampe vervollständigt die Kappe die Abdichtung des Gehäuses durch eine Dichtungsleiste, die an der Schulter der Öffnung angeordnet ist. Der Dichtungsdruck entsteht durch Berührung der Ringfläche der Kappe mit der Dichtungsleiste. Diese Kappe hat eine Anzahl von Einschnitten, welche das Lösen der Kappe mit Hilfe eines Schraubenschlüssels gestatten. Wenn ein Lampenwechsel erforderlich ist, wird die Kappe aus der Öffnung entfernt und auch ein Kontaktteile tragender Isoliereinsatz wird durch Angreifen an den nach oben vorspringenden Flanschen abgezogen, wodurch die elektrische Verbindung zwischen der Stromquelle und der Lampe unterbrochen ist Nach Entfernen der alten Lampe wird eine neue Lampe durch die Öffnung in der Tragplatte eingeschoben. Die neue Lampe wird selbsttätig ausgerichtet, und zwar bezüglich ihrer Höhe als auch ihrer Richtung. Dies geschieht durch die Wechselwirkung zwischen der Oberfläche der Tragplatte und der Unterseite des Ringes sowie von auf der Tragplatte angeordneten Stifte und der Öffnung.

Weiterhin ist aus der WO 99-03729 A1 ein Unterflurfeuer für Fahrbahnen, mit einer versenkt angeordneten Lampe als Strahlungserzeuger für Licht und wenigstens einem Ablenkprisma zur Abstrahlung unter vorgegebenem Winkel bekannt, bei dem das Ablenkprisma als Abschlussglas aus eingefärbtem Glas besteht, wobei für das abgestrahlte Licht ein definierter Farbort entsprechend den geforderten Spezifikationen der Normfarbtafel erreicht wird. Profilierungen des Prismenglases bildet an der Unterseite umlaufende Prismenringe. Dabei sind die Profilierungen jeweils in der vertikalen Höhe von außen nach innen versetzt und schließen jeweils einen Winkel ein, so dass die umlaufenden Flanken parallel zueinander sind. Das Prisma besteht aus eingefärbtem Gas, so dass es - ohne Verwendung von Filtern - unmittelbar die gewünschte Signalfarbe abstrahlt. Durch geeignete Einfärbung ist eine rote, eine gelbe, eine blaue oder auch eine grüne Abstrahlung möglich, einem Gehäuse mit darin angeordneter neuer optischer Einrichtung dargestellt. Das Gehäuse mit darin angeordneter optischer Einrichtung weist ein Oberteil zur Einbringung im Boden eines Flugfeldes auf, an das nach unten ein Gehäuseteil mit einer Fassung und einer Dichtung für ein sogenanntes Abschlussglas angebracht sind. Die "Lichtstrahlung" der Lichtquelle wird nicht direkt genutzt, sondern über einen Kombinationsspiegel in Ringzonen winkelabhängig reflektiert und zwar derart, dass die reflektierten Strahlenbündel durch die Prismenringe der Stufenlinse refraktiv abgelenkt werden, so dass im Hauptstrahlbereich eine spezifikationsgerechte Signalfarbe erzeugt wird. Vorzugsweise ist eine Reflektorlampe vorgesehen, bei der ein parabolförmiger Reflektor vorhanden ist, so dass die Lichtstrahlung als paralleles Strahlenbündel austritt. Möglich ist auch ein Ellipsoid-Reflektor zu Gewährleistung eines spezifischen Abstrahlfeldes. Vor dem Reflektor ist ein Strahlungsteiler angeordnet. Über dem Strahlungsteiler ist wiederum ein farbiges Abschlussglas für das komplette Unterflurfeuer zur rotations-symmetrischen Abstrahlung angebracht.

Weiterhin ist aus der FR 2 790 443 A1 eine im Boden enthaltene Beleuchtungsvorrichtung bekannt, die Lichtquellen mit Leuchtdioden in einer mehrstufigen Anordnung umfasst, die in Kombination mit einer Kombination von mechanischen und optischen Mitteln eine Beleuchtung ermöglicht und deren Zuverlässigkeit über den Standards liegt.

Weiterhin ist aus der US 2004-232624 A1 ein geschlossenes ringförmiges Dichtungsmaterial und Verfahren zu seiner Herstellung bekannt. Um die Arbeitslast am Einbauort auch dann zu reduzieren, wenn das Dichtungsmaterial in Form eines Bandes vorliegt, ist das Dichtmaterial ein geschlossenes ringförmiges Dichtungsmaterial, wobei die Enden in Umfangsrichtung eines oder mehrerer expandierter poröser Polytetrafluorethylenbänder miteinander verbunden sind. Die Breite des Dichtungsmaterials von dem Innenumfang zu dem Außenumfang ist grösser als die Dicke (t) der Außenumfangsfläche und der Elevationswinkel des ringförmigen Abschnitts des Dichtungsmaterials beträgt in Bezug auf die horizontale Ebene, die durch den Rand der Innenumfangsfläche davon gebildet wird, 0° bis 45° oder 0°.

Weiterhin ist in der nicht vorveröffentlichten Anmeldung DE 10 2016 011 815 A1 der Anmelderin ein Betriebsgerät mit gestaffeltem Überspannungs- und Überstromschutz und Antenne für die Ansteuerung von intelligenten Leuchtmitteln und Geräten beschrieben. Im Einzelnen besteht der Schutz aus verschiedenen nacheinander gestaffelten und aufeinander abgestimmten Schaltungsbereichen, wobei jeder dieser Schaltungsbereiche unterschiedliche Aufgaben für den Schutz übernimmt.

Die erste Ausführungsform des erfindungsgemäßen Betriebsgeräts weist sowohl einen ersten Zweig für den Anschluss eines Leuchtmittels (mit einem Schutz der Stromversorgung) als auch einen zweiten Zweig (mit einem Schutz, insbesondere einer Powerline Ankopplung) für den Anschluss mindestens eines Kommunikationsmoduls eines Geräts an getrennte erste und zweite Schnittstellenschaltungen am Ausgang des Betriebsgeräts auf.

Am Eingang des Betriebsgeräts ist eine für ersten und zweiten Zweig gemeinsame Grobschutzschutzschaltung angeordnet, welche einen Gasableiter und in Reihe zum Gasableiter zwei Varistoren aufweist und das System gegen große Pulse schützt. Hierbei werden Überspannungen auf eine niedrigere Spannung begrenzt und der Puls am Eingang des Systems kurzgeschlossen. Für den Überspannungs- und Überstromschutz hat ein am Ausgang des Grobschutzes im ersten Zweig angeschlossenes Netzfilter die Aufgabe, den durch den Grobschutz begrenzten Spannungspuls für nachfolgende Schaltungsteile zu verzögern, reduzieren und zu falten und die Anstiegsgeschwindigkeit zu reduzieren (siehe im Einzelnen die weiter unten beschriebenen vier Aufgaben zum Netzfilter). Ist nach dem Netzfilter die Restspannung des Pulses für die nachfolgenden Schaltungsteile zu hoch, wird diese durch eine am Ausgang des Netzfilters angeschlossene Klemmschaltung, bestehend in der 1. Stufe aus einem Feinschutz und in der 2. Stufe aus einem ersten Energieabsorber, begrenzt. Hierbei aktiviert der Feinschutz den ersten Energieabsorber und es erfolgt ein Kurzschluss des Spannungspulses, um die nachfolgenden Schaltungsteile vor Schäden zu schützen. Mit Erreichen des nächsten Nulldurchgangs der Netzspannung wird der Kurzschluss wieder deaktiviert. Bei weiterem Ansprechen des Feinschutzes F erfolgt eine erneute Aktivierung von erstem Energieabsorber.

Weiterhin ist im ersten Zweig am Ausgang der Klemmschaltung ein zweiter Energieabsorber angeschlossen, welcher beim Einschalten mit Hilfe eines NTC-Widerstands NTC (Negative Temperature Coefficient Thermistor, Heißleiter) den Strom begrenzt. Dies schützt die Schaltung vor hohen Strömen und entlastet gleichzeitig das Versorgungsnetz. Im Normalbetrieb ist der Widerstand NTC überbrückt, um die Verlustleistung zu minimieren. Erkennt der zweite Energieabsorber einen Überspannungspuls, so wird diese Überbrückung wieder aufgehoben. Dadurch erhöht sich der Innenwiderstand der Schaltung und es verringert sich die auftretende Energie in den nachfolgenden Schaltungsteilen. Weiterhin wirkt der zweite Energieabsorber als Einschaltstrombegrenzung.

Die Powerline Ankopplung im 2. Zweig koppelt die Kommunikationssignale einer Powerline Ankopplung direkt auf die Netzversorgungsleitungen. Aus diesem Grund schützt nur der Grobschutz die Ankopplung, nicht jedoch nachfolgende Schutzeinrichtungen. Aufgrund der Klemmspannung des Grobschutzes, deren Wert noch Schäden an der Ankoppelschaltung auslösen würde, benötigt die Schaltung zusätzliche Schutzmaßnahmen. Hierzu ist am Ausgang des Grobschutzes im zweiten Zweig ein Mittelschutz mit einem Übertrager angeschlossen, welcher während des Überspannungspulses in Sättigung geht. Die Sättigungseffekte des Übertragers bewirken eine stark eingeschränkte Übertragung der Pulsenergie auf die Sekundärseite des Übertragers. Zusätzlich befinden sich auf der Sekundärseite Komponenten, nämlich eine erste Feinschutzschaltung, ein damit verbundenes Filter zur Trennung von parallel ins Stromversorgungsnetz eingespeisten Kommunikationssignalen und eine zweite mit diesem Filter verbundene zweite Feinschutzschaltung, die den restlichen Spannungspuls begrenzen. Erfindungsgemäß ist die erste Feinschutzschaltung der Powerline Ankopplung mit der Sekundärseite des Übertragers verbunden, welcher störungsempfindliche Komponenten der Schaltung, insbesondere alle Eingänge eines Mikroprozessors zusätzlich durch spannungsbegrenzende Komponenten (Klemmdioden) schützt.

Zum Schutz der Ausgangsstufe des Betriebsgeräts/Vorschaltgeräts vor Überspannungen und Überströmen, die von dem Leuchtmittel auf das Vorschaltgerät einwirken, ist die erste Schnittstellenschaltung mit entsprechenden Begrenzungsschaltungen versehen. Die zweite Schnittstellenschaltung hat zum Schutz des Vorschaltgeräts ebenfalls einen Überspannungs- und Überstromschutz (siehe vorgeschaltete zweite Feinschutzschaltung). Durch die gestaffelt aufgebauten Schutzmaßnahmen wird ein effektiver Schutz des gesamten Betriebsgeräts/Vorschaltgeräts gewährleistet. Die Wirkungsweise der Schutzeinrichtungen ist so dimensioniert, dass die jeweiligen Einrichtungen alle nachfolgenden Schaltungsteile effektiv schützen und zwar von primär sowie sekundär.

Um den aus einer Norm für sichere elektrische Trennung geforderten Abstand zwischen Phase und Erdleiter bzw. Neutralleiter und Erdleiter von 4mm zu gewährleisten, ist am Erdleiter-Anschlusspunkt des Gasableiters eine zusätzliche Thermosicherung implementiert. Dadurch sind in jedem Pfad zwei Thermosicherungen mit jeweils 2mm Trennabstand in Reihe geschaltet. Alle Thermosicherungen sind thermisch mit den Varistoren 2 gekoppelt. Hierdurch wird der am Lebenszeitende erhöhte Leckstrom der Varistoren 2 detektiert.

Der im ersten Zweig angeordnete Netzfilter NF übernimmt im Betriebsgerät/Vorschaltgerät vier Aufgaben:
Erstens wird im Fall eines Überspannungs- bzw. Überstrompulses die Klemmenspannung, die am Ausgang der Grobschutzschaltung anstehen bleibt, gefaltet (durch die Eigenschaften des Netzfilters wird die Energiezeitverteilung verändert/ im Zeitbereich verzögert) und der Puls verzögert an nachfolgende Schaltungsteile weitergegeben. Die Faltung des Spannungspulses bewirkt eine Verringerung des Spitzenwertes bei einer gleichzeitigen Verlängerung des Pulses. Durch die Verzögerung des Pulses wird erreicht, dass der Blitzschutz als erste Maßnahme bei einem Überspannungs- oder Überstromereignis anspricht. Dadurch erfolgt der Abbau der Hauptenergie des Pulses am Grobschutz.

Die zweite Aufgabe des Netzfilters ist eine Filterung der vom System, z.B. im internen Netzteil und in der Lampenansteuerung erzeugten Gleichtakt-Störungen und Gegentakt-Störungen.

Die dritte Aufgabe des Netzfilters ist die Generierung einer hohen Impedanz für die parallel ins Netz eingespeisten Powerline Kommunikationssignale. Die Kommunikation über Powerline erfolgt in einem Frequenzbereich zwischen 30 kHz und 500 kHz. Dieser Frequenzbereich erfordert die hohe Impedanz um die Kommunikationssignale nicht kurzzuschließen bzw. durch eine niedrige Impedanz stark zu dämpfen. Eine hohe Impedanz ermöglicht eine gute Signalübertragung vom Netz zur Ankoppelschaltung und umgekehrt.

Die vierte Aufgabe des Netzfilters ist der Schutz des ersten Energieabsorbers vor schnellen Stromanstiegsgeschwindigkeiten, die aus dem Kurzschließen eines Überstromimpulses resultieren.

Bei einer bevorzugte Ausgestaltung des Netzfilters gemäß der nicht vorveröffentlichten Anmeldung DE 10 2016 011 815.6 der Anmelderin ist das Netzfilter ein LC-Filter 4. Ordnung mit Tiefpassverhalten. Die Eckfrequenz (-3dB) ist bei 2kHz festgelegt. Der Netzfilter ist gegen das Erdpotential/Erdleiter isoliert. Durch die Isolation wird verhindert, dass Power-Line-Communications Signale auf das Erdpotential/Erdleiter eingekoppelt werden. Ebenso wird verhindert, dass Störungen auf dem Erdpotential/Erdleiter die Power-Line-Communication PLC beeinflussen.

Zusätzlich ist ein Schutz gegen temporäre Überspannung enthalten. Das Betriebsgerät soll durch Netzfehler bedingte Überspannungen erkennen und den Eingangsanschluss von Netz abtrennen, um die nachgeschaltete Bauteile vor Überspannung zu schützen. Sobald der Überspannungsfehler gelöst ist, schaltet das Betriebsgerät den Eingang wieder zu und der ordnungsgemäße Betrieb wird fortgesetzt. Als Ab- bzw. Anschalter ist vorzugsweise ein in der Phase eingeschleiftes Relais eingesetzt.

Für die Kommunikation besitzt das Betriebsgerät/Vorschaltgerät vorzugsweise eine Powerline Kommunikationsschnittstelle, welche sich für folgende Aufgaben eignet:
- Steuerung des Betriebsgeräts/Vorschaltgeräts (Leuchtmittel An-, Ausschalten und Dimmen etc.),
- Abfragen von Statusmeldungen des Betriebsgeräts/Vorschaltgeräts,
- Initialisierung der Parameter des Leuchtmittels,
- Update der Firmware des Betriebsgeräts /Vorschaltgeräts.

Zusätzlich zur Powerline-Kommunikation können weitere Kommunikationsschnittstellen zur Verfügung stehen. Alle dieser Schnittstellen dienen für folgende Aufgaben:
- Steuerung des Vorschaltgeräts (Leuchtmittel An-, Ausschalten und Dimmen etc.)
- Abfragen von Status Meldungen des Vorschaltgeräts
- Initialisierung der Parameter des Leuchtmittels
- Update der Firmware des Vorschaltgeräts
- Anschluss von externen Geräten (z.B. Überwachungskamera, Bewegungsmelder, Sensoren und Aktoren, etc.)

Das Betriebsgerät/Vorschaltgerät kann zwischen den einzelnen Kommunikationsschnittstellen (z.B. zwischen WLAN und Powerline) als Gateway arbeiten. Damit ist es möglich verschiedene Netzwerktopologien miteinander zu verbinden. Durch eine derartige Verbindung verschiedener Netzwerke erhöhen sich die Kommunikationsreichweiten.

Das kompakt konstruierte Gehäuse gewährleistet eine Vielzahl an Anschluss- sowie Systemvariationen des Betriebsgerät/Vorschaltgeräts. Die verschiedenen Variationen der Gehäusekonstruktion ermöglichen eine einfache, kostengünstige Herstellung ohne Zusatzkosten sowie eine komplexe Lösung. Ebenso ermöglicht die Konstruktion eine einfache und schnelle Montage der Bestandteile (z.B. der bestückten Leiterplatten, Kühlkörper und Trennwände) des Betriebsgeräts/Vorschaltgeräts in das Gehäuse. Zudem erfüllt das Gehäuse alle gültigen Vorgaben gegen direktes Berühren und Eindringen von Flüssigkeiten und Kleinstpartikeln.

Das Gehäuse des Betriebsgeräts/Vorschaltgeräts besteht aus zwei symmetrischen Halbschalen (in der Zeichnung nicht dargestellt), die mittels Schnapptechnik, d.h. durch Zusammenführen mehrere Schnappverschlüsse verbunden bzw. geschlossen werden. Daraus ergibt sich eine einfache und sichere Montage. Die Schnappverschlüsse der Halbschalen befinden sich außerhalb des abgedichteten Bereichs.

Das Gehäuse ist so ausgelegt, dass je nach Anwendungsgebiet verschiedene Baugruppen (Controller-Board mit Mikroprozessor MP, unterschiedliche Ballastcontrol- und Kommunikationsmodule) darin verbaut sein können. Flächige sowie seitliche Befestigungsbohrungen im Überstand der Halbschalten ermöglichen variable Einbaulagen des Geräts.

Je nach Kabeleinführung (mittels Kabelverschraubung oder Durchführungstülle) und Art des Vergusses (eingefüllte Vergussmasse) lässt sich eine Schutzart von bis zu IP68 erreichen. Der Verguss einer Baugruppe in einer Halbschale kann variabel stufenweise (1 bis 4 Stufen) erfolgen. Hierdurch lässt sich die Menge der Vergussmasse je nach Aufbau der verwendeten Baugruppe minimieren und für deren Schutz optimieren. Optional lässt sich auch das gesamte Gehäuse vergießen, wobei zwar mehr Vergussmasse nötig ist, sich jedoch der Herstellungsaufwand verringert.

Die Halbschalen besitzen in den Seitenwänden eine Nut. Hier lässt sich optional eine Dichtschnur einlegen, um eine Dichtheit des Gehäuses zu erreichen. In diesem Fall kann das Vergießen entfallen.

Durch im Gehäuse eingelegte Kühlbleche erfolgt ein effizientes Wärmemanagement für Komponenten mit höherer Wärmeentwicklung durch optimierte Wärmeabgabe an die Umgebung. Zum Ausgleich unterschiedlicher Bauteilhöhen lassen sich zudem optional Kühlblöcke in das Gehäuse einlegen. Durch Verwendung einer Wärmeleitfolie, welche an der Gehäuseaußenseite, in einer, in den Halbschalen eingeprägten Vertiefung aufgeklebt ist, lässt sich die Wärmeabgabe noch weiter verbessern, indem an dieser Stelle eine direkte thermische Kopplung mit dem Befestigungsträger erfolgt.

Um durch Potentialanbindung eine verbesserte EMV-Schirmung zu erreichen lassen sich die Kühlbleche per Gewindebolzen und Schraube mit den Leiterplatten verbinden. Optional kann eine Potentialtrennung oder -bindung zwischen Schutzerde (auf Netzeingangsseite) und den Funktionserden (auf Leuchtmittel- und Schnittstellenseite) erfolgen.

In den Halbschalen sind Führungen für die Verbindungsstecker eingearbeitet, wodurch die korrekte Ausrichtung der Baugruppen (Controller-Board und ggf. Kommunikationsmodul bzw. Ballastcontrol) in der jeweiligen Halbschale gewährleistet ist. Da hierdurch auch ein Toleranzausgleich der Leiterplattenfertigung erfolgt ist eine weitere Befestigung der Baugruppen und Stecker nicht erforderlich. Die Führungen sind voreilend, so dass ebenso eine Ausrichtung zwischen den beiden Halbschalen erfolgt.

Durch die Halbschalen ergibt sich einen Funktionstrennung des Gerätes: Eine Halbschale enthält das Controller-Board mit Mikroprozessor und optional eine universelle Schnittstelle für zusätzliche Varianten von Kommunikationsmodulen. Die andere Halbschale enthält die Ballastcontrol, dessen Model abhängig von der Leistungsklasse des verwendeten Leuchtmittels ist. Diese Funktionstrennung ermöglicht eine einfache Anpassung des Vorschaltgeräts an das zu verwendete Leuchtmittel, Leistungsklassen, Potentialtrennung und Schutzklasse sowie eine einfache und effiziente (schnelle) Reparatur mit optimierte Ersatzteilhaltung für die Geräte.

Auf den Leiterplatten können beispielsweise bis zu acht Statusanzeigen/Anzeigemittel (SMD-LEDs) direkt verbaut sein, da die Lichtleitung durch einfache Lightpipes in der Vergussmasse direkt zur Gehäuseaußenwand erfolgt. Hierzu befinden sich in den Gehäusehalbschalen an den Stellen, wo die Lightpipes auf die Gehäusehalbschale treffen, Führungsringe und Vertiefungen in der Gehäusewand. Durch diese Vertiefungen ist eine bessere Sichtbarkeit der Statusanzeigen gegeben. Die Führungsringe dienen zur Lichtleitung sowie Justierung der Lightpipe und gleichzeitig zum Schutz vor unbeabsichtigtem Einfließen der Vergussmasse in den Lichtkanal.

Weiterhin ist in der nicht vorveröffentlichten Anmeldung DE 10 2016 011 815.6 der Anmelderin eine zweite Ausgestaltung eines erfindungsgemäßen Betriebsgeräts/Vorschaltgeräts integriert in einer LED-Lampe für 230V/115V mit Elektronik im Lampenfuß, z.B. E-Gewinde einer handelsüblichen Glühlampe, zur Realisierung eines Gesamtgeräts beschrieben. Das Gesamtgerät integriert eine LED-Lampe und ein Gateway, wobei die für die Lampenfunktion notwendige Elektronik für den Betrieb der LEDs im Gerät enthalten ist. Das Gesamtgerät besteht aus einem "Leuchtkörper" und einem Gerätefuß mit Anschlusssockel (E-Gewinde und Fußkontakt). Im oberen Lampenteil mit der Schutzkappe sind die LEDs und eine Optik zur Lichtverteilung (Diffusor) sowie Sensoren (insbesondere Helligkeit, Farbe) enthalten, der untere Teil beinhaltet die gesamte Elektronik, sowohl für die LED-Ansteuerung, als auch für die PLC- und BLE-Kommunikation. Durch diese räumliche Anordnung wird die Temperaturbeeinflussung der Elektronik verringert. Der dazwischen liegende Raum wird vorzugsweise für einen Bluetooth-Empfänger und Balun sowie einer Antenne genutzt, wobei die Gehäuseform es ermöglicht, auf überraschend einfache Art und Weise einen entsprechenden Öffnungswinkel des gewinkelten Dipols zu realisieren. Für das Funksystem des Gesamtgeräts wird eine effiziente Antenne benötigt, die dennoch möglichst alle Raumbereiche gleichermaßen abdeckt und daher keine Richtwirkung aufweisen soll. Hierzu kommt im Gehäuse eine Leiterplattenantenne als gewinkelter Dipol mit mindestens einem Strukturelement, insbesondere zusätzlichen Stiften, welches die Antenne in die 3. Dimension erweitert zum Einsatz. Durch die Stifte wird eine Homogenisierung der Richtcharakteristik erreicht, die breiten Leiterbahnen sorgen für eine ausreichende nutzbare Bandbreite, aber auch für eine höhere Toleranz gegen Umgebungseinflüsse.

Wie die vorstehende Würdigung des Standes der Technik aufzeigt, sind Betriebsgeräte für die Ansteuerung verschiedener Leuchtmittel seit langem bekannt, wobei auch im Flughafenbereich eine Vielzahl von unterschiedlichen Typen von Unterflurfeuer sowie Überflurfeuer eingesetzt werden. Insbesondere haben die verschiedenen Flughäfen für das Problem der Wartung unter Spannung bisher jeweils verschiedene Lösungsansätze und Vorgehensweisen erarbeitet. Bei Einzellampensteuerung erkennt die Steuerung vor Ort die ausgefallene Lampe an den hohen Spannungsspitzen und schließt die Lampe sofort kurz. Sie merkt sich, dass die Lampe ausgefallen ist und meldet dies über den Kommunikationskanal der übergeordneten Steuerung. Damit sind der Ort und die Menge aller Lampen bekannt. Es kann jedoch festgestellt werden, dass es derzeit noch an einem Feuer in Verbindung mit der Elektronik fehlt, welche den rauen externen Einflüssen widersteht und dadurch einen sicheren und langlebigen Betrieb am Flughafen ermöglichen.

Beispiele für die externen Einflüsse/Umwelt-Einflüsse sind:
- Wettereinflüsse (Regen, Schnee, Eis, Temperatur)
- mechanische Beanspruchung (z.B. Schneepflug, Stoßbelastung Flugzeug, ..)
- Chemische Beanspruchung (z.B. Kerosin, Enteisungsmittel, Säure, Öle,...)
- Elektrische Einflüsse Versorgung (z.B. Blitzeinschläge, Überstrom, Überspannung, Netzflicker (elektrische Spannungsschwankungen im Stromnetz),..)
- optische Einflüsse (z.B. Fremdlicht,...)

Der Erfindung liegt die Aufgabe zugrunde, ein in der nicht vorveröffentlichten Anmeldung DE 10 2016 011 815 A1 der Anmelderin beschriebenes universell einsetzbares, flexibles und hoch integriertes Betriebsgerät für die Ansteuerung verschiedener Leuchtmittel derart weiter auszugestalten, dass einerseits verschiedene Leuchtmittelarten z.B. LED, HQI (Halogen-Metalldampflampe in Quarztechnologie), NDL (Natriumdampflampe) usw. unterstützt werden und andererseits dieses in verschiedenen Leistungsklassen mit hoher Effektivität betrieben werden kann. Durch geeignete konstruktive Maßnahmen in Verbindung mit der Elektronik soll eine einfache Aufbau- und Montagetechnik erreicht werden, welche ein wirtschaftlich effizientes und robustes Produkt gewährleisten.

Diese Aufgabe wird durch eine Vorrichtung mit den Merkmalen des Patentanspruchs 1 gelöst.

Die erfindungsgemäße Vorrichtung mit einem integrierten Betriebsgerät ist universell einsetzbar, insbesondere zur Befeuerung der Start- und Landebahnen sowie der Taxiway an Flughäfen. Die Aufbautechnik erfolgt nach dem erfindungsgemäßen Zwei-Kammern-Prinzip mit der Trennung der Kammern mittels Reflektor, welcher in Verbindung mit der flexiblen Isolier- und Wärmeleitfolie gleichzeitig zur Abdichtung dient. Weiterhin weist die Erfindung den Vorteil auf, dass der Auswahlschalter eine Auswahl der LED-Ketten zur Selektion der jeweiligen LEDs und die damit verbundene Kaskadierung von LED-Modulen sowie eine Redundanzfunktion ermöglicht.

In Weiterbildung der Erfindung weist, gemäß Patentanspruch 4, die optische Einheit eine Linse auf und zur Aufheizung von Prisma, Linse und Kontrollelektronik weist das mindestens eine LED-Modul zusätzliche IR - LEDs mit Vorwiderständen auf.

Diese Weiterbildung der Erfindung weist die Vorteile auf, dass die IR - LEDs mehrere Aufgaben erfüllen, nämlich zur Enteisung von Prisma und Lichtkanal und zur Kommunikation als Sender und dass der Vorwiderstand (Längswiderstand) zur IR-Strombegrenzung und gleichzeitig Heizung dient.

Weitere Vorteile und Einzelheiten lassen sich der nachfolgenden Beschreibung von bevorzugten Ausführungsformen der Erfindung unter Bezugnahme auf die Zeichnungen entnehmen. In der Zeichnung zeigt:
- Fig. 1: den Gehäuse-Aufbau nach einem Zweikammer Prinzip der erfindungsgemäßen Vorrichtung mit einem integrierten Betriebsgerät im Schnitt,
- Fig. 2: die erfindungsgemäße Vorrichtung nach Fig. 1 in Explosionsdarstellung,
- Fig. 3: den Gehäusedeckel ohne bestückter Optik der erfindungsgemäßen Vorrichtung nach Fig. 1 in der Draufsicht von unten,
- Fig. 4: die erfindungsgemäße Vorrichtung nach Fig. 1 entlang der gewinkelten Schnittlinie A-A der Fig. 3,
- Fig. 5: die bestückte Leiterplatte eines LED-Moduls in Draufsicht,
- Fig.6: im Detail den Aufbau eines Dots des LED-Moduls nach Fig. 5,
- Fig. 7: die bestückte Leiterplatte eines LED-Moduls nach Fig. 5 in Seitenansicht,
- Fig. 8: Beispiele für die Ansteuerung des Dots für verschiedene Feuer,
- Fig. 9: das Blockschaltbild der Komponenten (Elektronik + Optik) des Feuers,

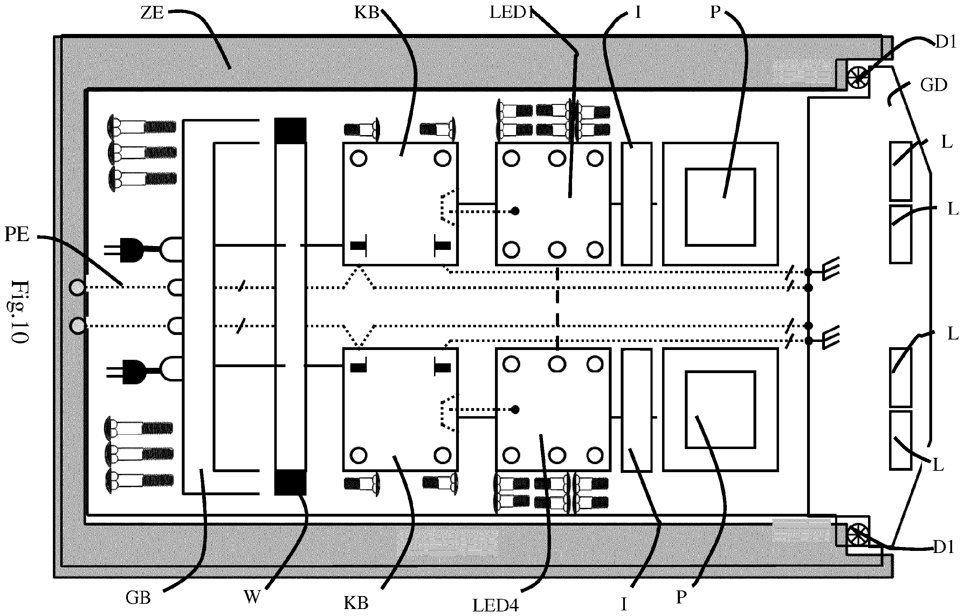

- Fig. 10: schematisch den Aufbau und die Anordnung/Verbindung der Komponenten der erfindungsgemäßen Vorrichtung,
- Fig. 11: das Blockschaltbild zum Blitzschutz, Spannungsversorgung und Kommunikation der erfindungsgemäßen Vorrichtung,
- Fig. 12: die Anordnung verschiedener Sensoren im LED-Modul,
- Fig. 13: eine Ausgestaltung zur redundanten Steuerung der LED-Module,

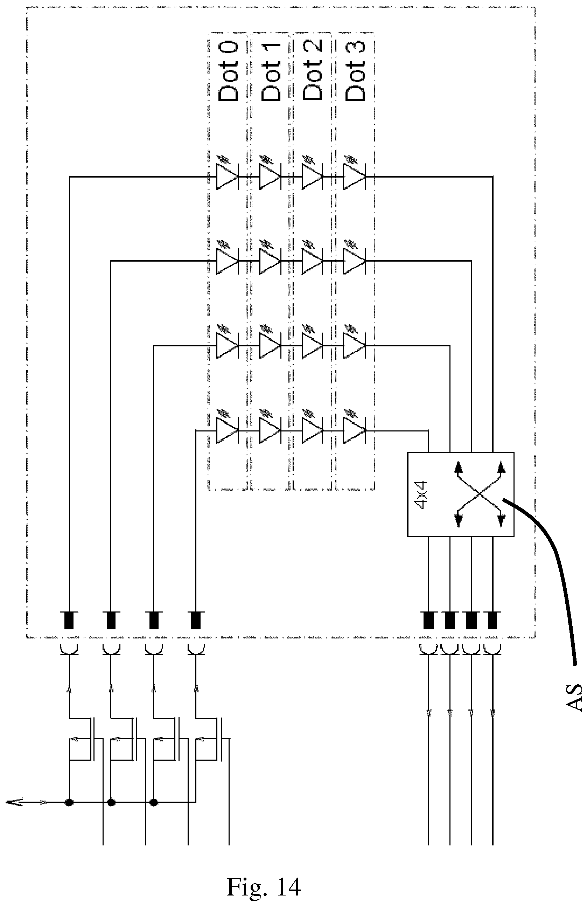

- Fig. 14: die Ansteuerung einer ersten Ausführungsform eines seriellen LED-Moduls,

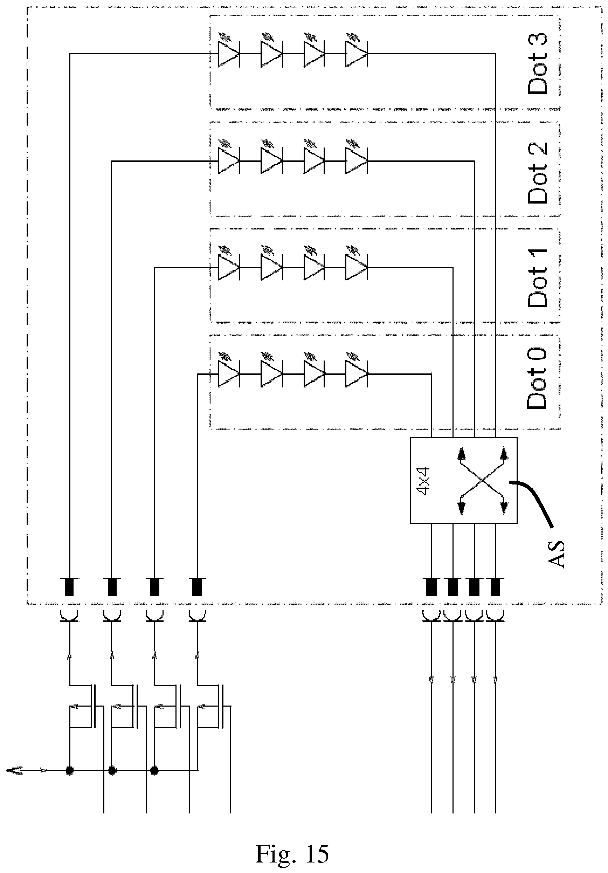

- Fig. 15: die Ansteuerung einer zweiten Ausführungsform eines seriellen LED-Moduls,

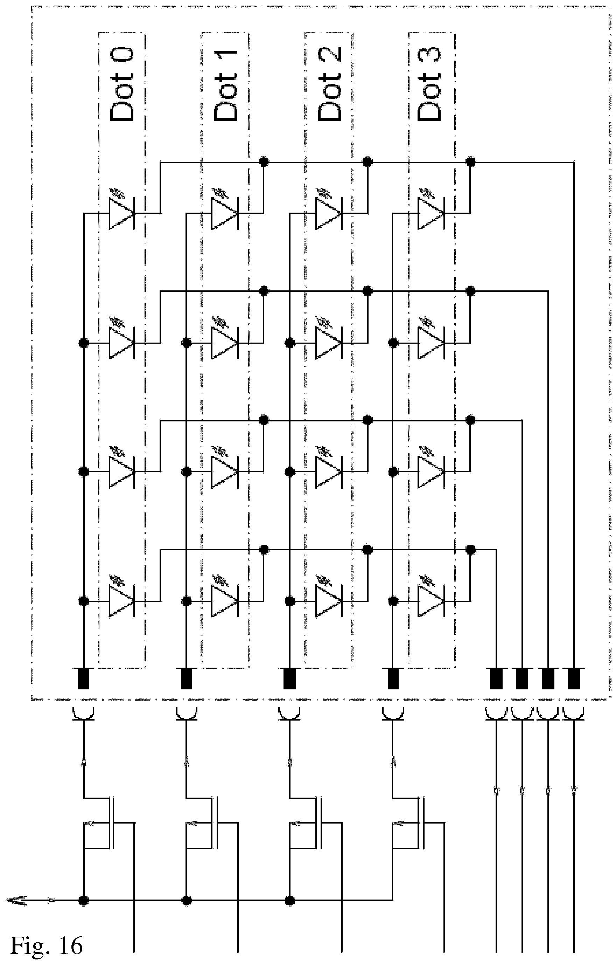

- Fig. 16: die Ansteuerung einer zweiten Ausführungsform eines parallelen LED-Moduls der erfindungsgemäßen Vorrichtung,

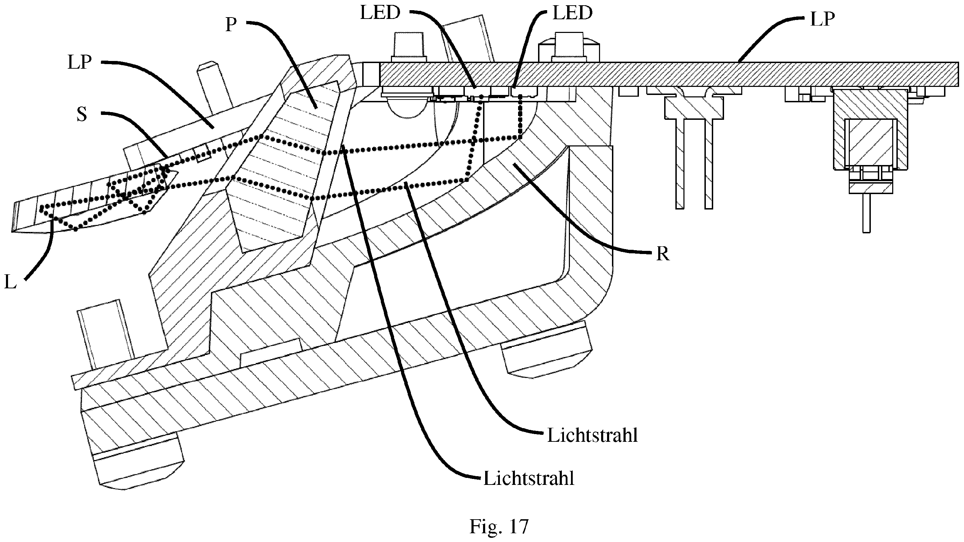

- Fig. 17: im Detail den Strahlengang des Streulichtes für zwei im Gehäuse-Deckel angeordnete optische Einheiten in Schnittdarstellung,
- Fig. 18: im Detail die Linse in Seitenansicht,
- Fig. 19: im Detail die Anordnung der Dichtungen im Gehäuse-Deckel in Draufsicht von unten und
- Fig. 20: das Blockschaltbild eines Kurzschlussschalters (open lamp relais).

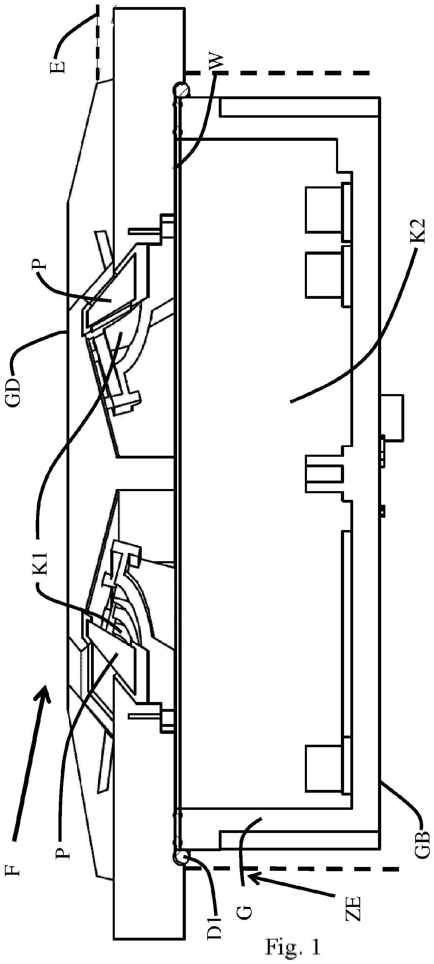

Fig. 1 zeigt im Schnitt den Aufbau der erfindungsgemäßen Vorrichtung mit einem integrierten Betriebsgerät, insbesondere zur Befeuerung der Start- und Landebahnen sowie der Taxiway an Flughäfen, wobei deren Gehäuse G nach einem Zweikammer Prinzip aufgebaut ist. Im Folgenden wird die Anwendung der erfindungsgemäßen Vorrichtung als Feuer F, insbesondere Unterflurfeuer F, für die Ausgestaltung mit zwei LED-Modulen LED1und LED2und und vier LED-Ketten (bzw. vier dots DT) näher erläutert und beschrieben.

Eine erste Kammer K1 des Unterflurfeuers F enthält die optischen Elemente, insbesondere LED's LED, die zweite Kammer K2 enthält die Kontrollelektronik KE sowie Kabelverbindungen KV. Die Trennung der Kammern K1, K2 erfolgt durch eine optischen Einheit O (umfassend mindestens ein LED-Modul LED1 und einen Reflektor R) und die Dichtung zum Gehäuse-Deckel GD erfolgt in Verbindung mit einer Isolier- und Wärmeleitfolie I. Die auf der Unterseite des Gehäusedeckels GD eingelegte Isolier- und Wärmeleitfolie I dient zur elektrischen Isolierung und Wärmeableitung eines Kontrollelektronik-Boards KB (siehe nachfolgende Beschreibung). Hierdurch wird eine Abdichtung zwischen der Kammer K1 mit dem mindestens einem optischen LED-Modul LED1 und Reflektor R und der Kammer K2 für die Elektronik erreicht. Zusammen mit einer Dichtung DP, welche die zur Lichtaustrittsöffnung GF gerichtete Stirnseite eines Prismas P im eingebauten Zustand der optischen Einheit O dichtet und durch eine in eine Ausnehmung des Gehäuse-Deckels GD dichtend eingebrachte (insbesondere eingeklebte) Linse L erfolgt die Dichtung des Feuers F gegen externe Einflüsse, insbesondere gegen von der Oberseite des Gehäuse-Deckels GD eindringende Flüssigkeit. Weiterhin trägt die Trennung zwischen den beiden Kammer K1, K2 zum Schutz der Elektronik vor eindringender Flüssigkeit/Feuchtigkeit bei.

Zusätzlich kann die Kammer K2 für die Kontrollelektronik KB, für einen noch besseren Feuchtigkeitsschutz, vergossen und gleichzeitig als Gussform genutzt werden.

Durch den Aufbau ist die optische Einheit O (LED-Module LED1 bis LED4 und Reflektor R) separiert und gut erreichbar. Hierdurch werden Wartung und Service erleichtert. Durch das Lösen von vier Schrauben, nämlich zweiter und dritter Schrauben S2 und S3 je optischer Einheit (je nach Ausführungsvariante) auf der Innenseite des Gehäuses G ist die optische Einheit O zugänglich, das auf der der Unterseite des Gehäuses G montiert ist. Damit ist es möglich die gesamte optische Einheit O oder auch einzelne Komponenten der Einheit O zu warten oder auszutauschen.

Das Gehäuse des Unterflurfeuers F ist für die Aufnahme von bis zu zwei Kontrollelektroniken KE und bis zu acht LED-Modulen (zweimal LED-Modul LED1 bis LED4) konstruiert. Dadurch ist das Gehäuse G für alle im Flughafenbereich benötigten Unterflurfeuer einsetzbar.

Die mechanische Positionierung der optischen Einheit O ist wie folgt:
Bei der Montage erfolgt zunächst die Positionierung des Reflektors R auf einer LED-Leiterplatte LP mit drei Passstiften PS (Durchstecktechnik). Diese bilden damit eine Einheit, die separat für alle 3 Koordinaten (X, Y, Z) vorkalibriert ist. Die drei Passstifte PS dienen gleichzeitig dazu, dass der Reflektor R sowie die LED-Leiterplatte LP plan auf dem Gehäuse-Oberteil aufliegen. Dadurch wird eine größtmögliche Berührungsfläche der LED-Leiterplatte LP zur Isolierfolie I und Wärmeleitfolie realisiert. Zwei Schraubverbindungen stellen eine feste Verbindung zwischen der LED-Leiterplatte LP und dem Reflektor R sicher. Das mindestens eine LED-Modul LED1 bildet zusammen mit dem Reflektor R eine Optische Einheit O.

Für optimale Positionierung der Optischen Einheit O auf dem Gehäuse-Deckel GD reichen die Passstifte bis in die Positionsbohrungen des Gehäuse-Deckels GD. Die Optische Einheit O ist mit vier Schrauben auf dem Gehäuse-Deckel GD montiert. Zwei Schrauben gehen durch das jeweilige LED Modul samt LED-Leiterplatte LP und den Reflektor R. Zwei andere Schrauben verschrauben den Reflektor R mit dem Gehäuse-Deckel GD. Der Reflektor R ist so geformt, dass das Prisma P bzw. dessen Dichtung D gegen ein Gehäusefenster GF gedrückt wird. Auf diese Weise erzeugt man einen guten Dichtungsabschluss zwischen der Optischen Einheit O und dem Gehäusefenster GF mit dem Prisma P bzw. der Linse L. Dies stellt die erste Kammer K1 des Aufbaues dar.

Wie beschrieben, trennt der Reflektor R die erste Kammer Klmit dem mindestens einem LED Modul LED1 von der Kammer K2 mit der Kontrollelektronik KE. Für den optimalen vertikalen Winkel des mindestens einen LED Moduls LED1 gegenüber der Linse L wird eine flexible Isolier- und Wärmeleitfolie I als Unterlage zwischen den LED Modul LED1und dem Gehäuse-Deckel GD eingefügt. Dies gleicht eventuell vorhandenen Fertigungstoleranzen der Komponenten (Reflektor R, LED-Leiterplatte LP) aus. Zusammen mit den Passstiften werden damit definierte Positionen erreicht und somit die optische Vorkalibrierung des mindestens einen LED Moduls LED1 ermöglicht.

Im Unterschied zwischen den herkömmlichen Vorrichtungen (beispielsweise dem in der DE 203 09 405 U1 beschriebenen Unterflurfeuer bei dem zwei Gehäuse mit LEDs und Optik in einer nach oben offenen Ausnehmung des Deckelteils dichtend angeordnet und befestigt ist, wobei die Oberseite der beiden Gehäuses einen Teil der überfahrbaren Oberseite des Deckelteils bilden und das Licht in entgegengesetzten Richtungen unter einem Winkel zum Untergrund abgestrahlt wird) und der erfindungsgemäßen Vorrichtung ist die Optische Einheit O mit dem Reflektor R innen nach oben montiert. Ein weiterer Unterschied liegt darin, dass die Optische Einheit O auf der Unterseite des Gehäusedeckels GD montiert ist, was den Service und die Wartung vereinfacht, indem ein Tauschen von LED Modulen LED1, LED2, ... ohne Kalibrierung bzw. Neujustierung ermöglicht wird. Durch den erfindungsgemäßen Aufbau des Unterflurfeuers F ist dieses unempfindlich gegen Umwelteinflüssen, insbesondere durch die mehrfachen Dichtungen. An den insbesondere aus Aluminium bestehenden massive Gehäuse-Deckel GD ist -wie beim Stand der Technik, siehe beispielsweise DE 203 09 405 U1, ein topfförmigen, insbesondere zylindrischer Einsatz Z mit dem Gehäuse-Deckel GD verschraubt, wobei an den aneinderstoßendes Flächen eine Ringdichtung D1 in einer Nut des Gehäuse-Deckels GD angeordnet ist.

Die Optische Einheit O besteht aus fünf Komponenten: Prisma P, Linse L für Sensor S, Dichtung DP des Prismas P, Gehäuse-Deckel GD und LED Modul LED1, LED2, .... Die Konstruktion der optischen Elemente LED gewährleistet eine optimale Effizienz der Lichtcharakteristik, welche die Vorgaben der FAA (Federal Aviation Administration (Bundesluftfahrtbehörde der Vereinigten Staaten): Unidirektionale Feuer müssen so ausgerichtet werden, dass diese die Mittellinie an einem Punkt, der den vierfachen Abstand der Feuer entspricht, kreuzt; Bidirektionale Feuer müssen so ausgerichtet werden, das diese parallel zur Tangente der Kurve abstrahlen) und der ICAO (International Civil Aviation Organization (Internationale Zivilluftfahrtorganisation): Feuer in Kurven müssen einen Vorspurwinkel von 15,75° zur Tangente der Kurve haben) erfüllt.

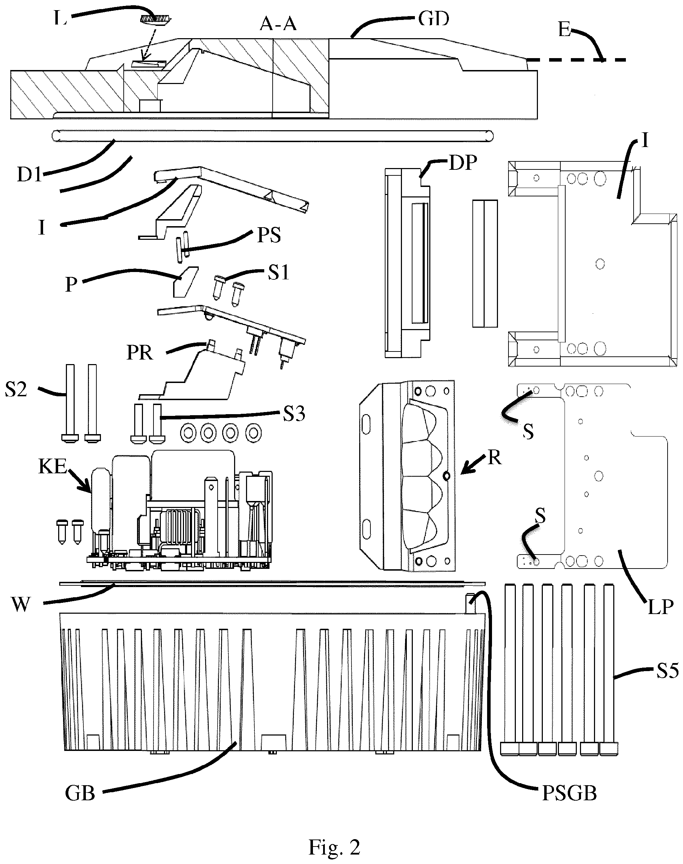

Fig. 2 zeigt zur Verdeutlichung des konstruktiven Aufbaus und der Montage der erfindungsgemäßen Vorrichtung nach Fig.1, diese in Explosionsdarstellung. Dabei sind die Einzelteile im mittleren Bereich links in Seitenansicht und in der Mitte und recht in Draufsicht dargestellt.

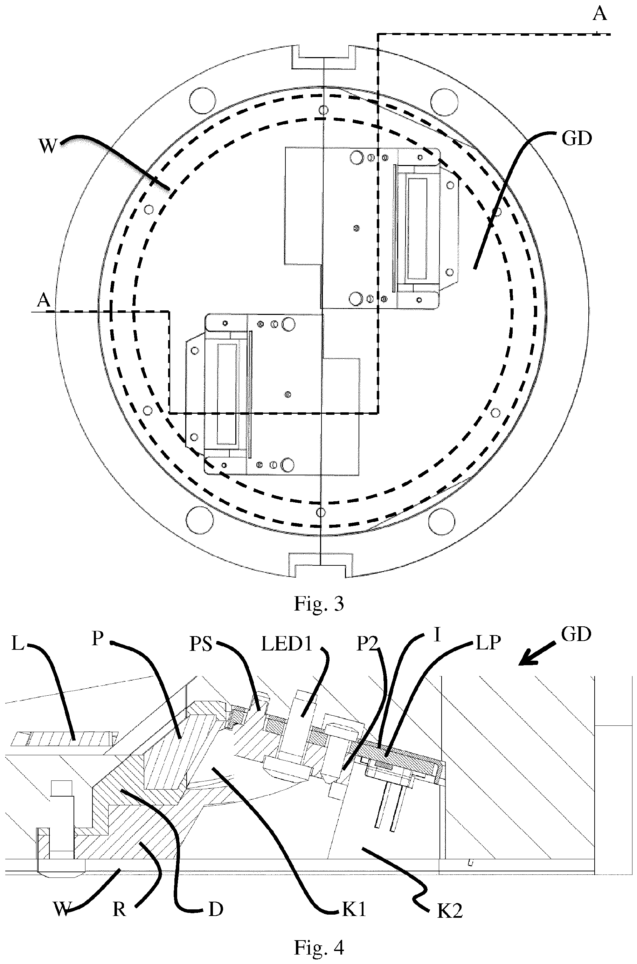

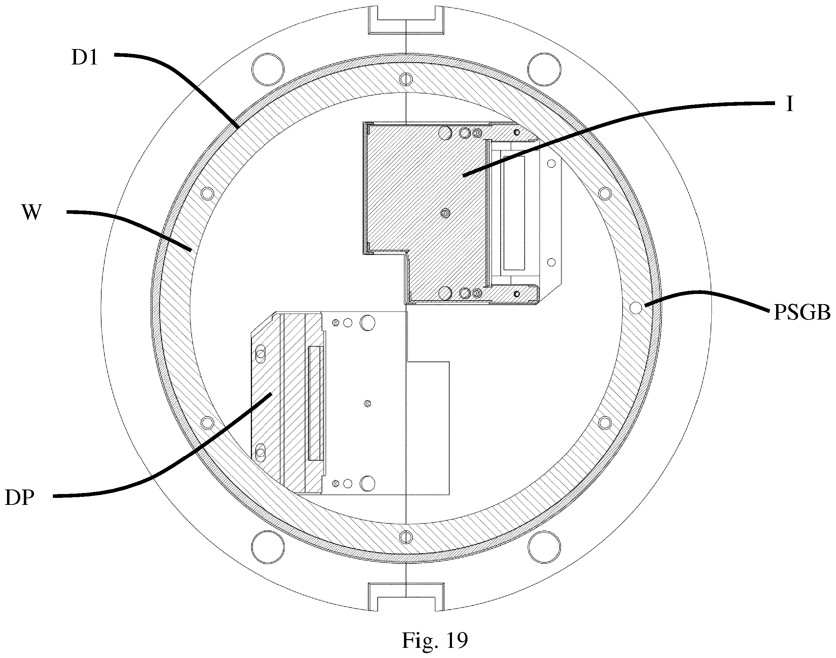

Fig. 3 zeigt den Gehäusedeckel GD ohne bestückter Optik der erfindungsgemäßen Vorrichtung nach Fig.1 in der Draufsicht von unten; Fig. 19 zeigt ergänzend hierzu im Detail die Anordnung der Dichtungen im Gehäuse-Deckel GD in Draufsicht von unten, nämlich den Dichtungsring (O-Ring) D1 für den zylindrischen Einsatz ZE, die Flachdichtung W für die zweite Kammer K2 (in Fig. 3 gestrichelt gezeichnet), die Dichtung DP des Prisma P und die Isolier- und Wärmeleitfolie I.

Weiterhin zeigt Fig. 4 im Detail die erfindungsgemäße Vorrichtung nach Fig.1 entlang der gewinkelten Schnittlinie A-A der Fig. 3.

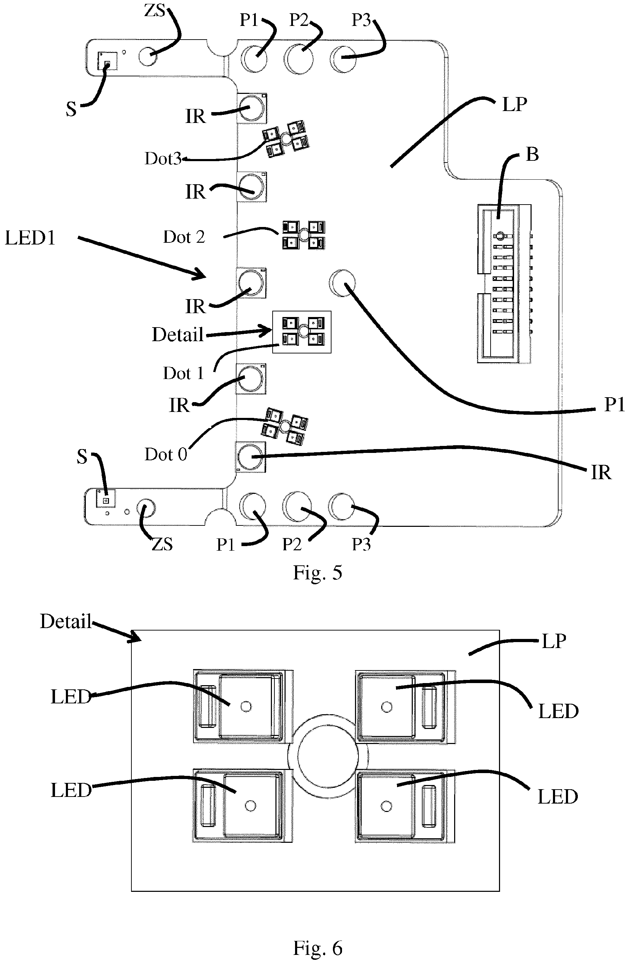

Fig. 5 zeigt schematisch eines der LED Module (z.B. LED1). Die Verbindung zwischen der Kontrollelektronik KE und dem LED Modul LED1 erfolgt über ein Flachbandkabel KV zu einer Buchse B.

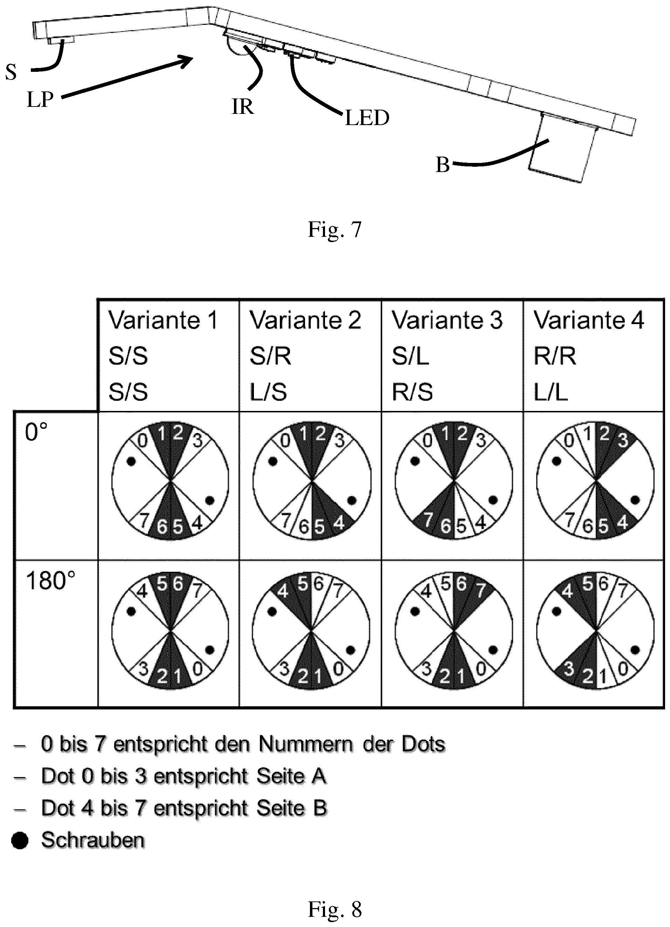

Auf dem LED Modul sind vier LED-Ketten mit je vier LEDs. Die LEDs sind auf vier Gruppen zu je vier LEDs aufgeteilt. Eine solche Gruppe wird Dot DT genannt. Fig. 6 zeigt schematisch einen solchen Dot DT. Je nach Aufbau (Bestückung) des LED Moduls (z.B. LED1) besteht ein Dot DT aus den LEDs mit den Farben Rot, Grün, Blau und Weiß oder aus einer einzelnen Farbe. Für eine zusätzliche Flexibilität des LED Moduls ist je ein Auswahlschalter AS (XTY - Multiplexer) für die LED-Kettenansteuerung auf dem LED Modul vorgesehen. Mit dem Auswahlschalter AS kann aus einer Anzahl von Eingangssignalen eines ausgewählt und an den Ausgang durchgeschaltet werden. Durch eine individuelle Ansteuerung der einzelnen LED-Ketten und der Dots DT sowie der Auswahlschalter AS können unterschiedliche Aufgaben erfüllt werden:
- RGBW Regelung → es können alle benötigten Farben realisiert werden je Dot DT.
- Helligkeitsregelung → es können unterschiedliche Lichtstärken eingestellt werden.
- Ein- und Ausschalten von Dots DT→ es können Kurvenlichter realisiert werden (siehe Fig. 8).
- Redundanz → Ansteuerung einer LED-Ketten mittels zwei Kontrollelektroniken KE.
- Redundanz → Ansteuerung von bis zu zwei LED-Ketten in einer Farbe eines LED-Moduls zur Kompensation eines Ausfalls von LEDs in einer LED-Kette.

Durch diese Konfiguration wird erreicht, dass mit einer geringen Anzahl von unterschiedlichen LED - Modulen LED1, LED2, .... viele unterschiedlichen Typen von Flugfeldbefeuerungen realisierbar sind. Dies erleichtert die Wartung und Service, da für die Vielzahl von Flugfeldbefeuerungen nur eine geringe Anzahl unterschiedlicher LED - Module LED1, LED2, .... benötigt werden.

Durch die Möglichkeit zur redundanten Ansteuerung der LED-Ketten mittels zwei Kontrollelektroniken KE wird im Fehlerfall, z.B. ein Defekt in einer Ansteuerschaltung oder ein Kabelbruch usw., eine erhöhte Ausfallsicherheit (Redundanz) für den Flughafenbetrieb gewährleistet.

Auf dem jeweiligen LED Modul LED1, LED2, .... sind vorzugsweise IR - LEDs IR mit Vorwiderständen, beispielsweise fünf IR - LEDs IR, vorhanden. Diese sollen das Prisma P bzw. die Linse L und die Elektronik KE aufheizen, um die Betriebstemperatur zu erzeugen, sowie die Eisbildung auf der Außenseite des Prismas/Linse P/L zu vermeiden bzw. im Fall eines Kaltstart vorhandene Vereisung abzuschmelzen oder Feuchtigkeitsbeschlag (Kondensationsschicht auf der Innenseite der verglasten Fläche)zu entfernen.

Insbesondere können die IR-LED's IR als Kommunikations Kanal zum Senden im IR Bereich verwendet werden und ein RGB-Sensor S dient gleichzeitig als Kommunikationsempfänger (bidirektionale IR Kommunikation).

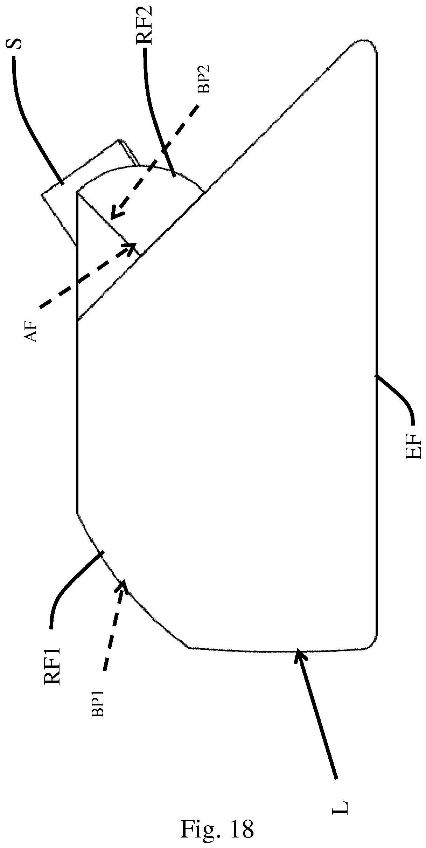

Auf dem jeweiligen LED Modul LED1, LED2, .... sind vorzugsweise zwei RGB-Sensoren S platziert. Der Lichtstrahl, der vom Feuer F ausgeht, wird an den Rändern des ausgestrahlten Lichtstrahls mit zwei Linsen L, vorzugsweise konvexen Scheibenlinsen, gesammelt. Diese erzeugen je einen Brennpunkt an der jeweiligen Sensor-Einbauposition. Wie die Fig. 18 im Detail zeigt, besteht die Linse L aus einem Eintrittsfenster EF, einem Austrittsfenster AF und zwei Reflektorflächen (RF1, RF2). Beide Reflektorflächen RF1, RF2sind paraboloid-ähnlich mit Freiformen.

Das Streulicht des Unterflurfeuers F tritt am Eintrittsfenster EF der Linse L ein und wird über die erste Reflektorfläche RF1 zu einem ersten Brennpunkt BP1 reflektiert. Der erste Brennpunkt BP 1 liegt innerhalb der zweiten Reflektorfläche RF2. Das im ersten Brennpunkt BP1 gesammelte Streulicht wird über die zweiten Reflektorfläche RF2 in den zweiten Brennpunkt BP2 reflektiert. Der zweite Brennpunkt BP2 liegt auf der Sensorfläche des Sensors S. Demgemäß wird durch die Linse L das Streulicht gezielt auf den Sensor S geleitet.

Die RGB-Sensoren S überwachen sowohl die Lichtintensität als auch die Lichtwellenlänge, um die optischen Eigenschaften für das Feuer F zu überwachen. Bei Abweichungen stellt die Kontrollelektronik KE die Ansteuerung der LEDs LED neu ein, um die Abweichungen zu kalibrieren (Farbe, Helligkeit).

Da die Linsen L an der Außenseite des Gehäuses platziert sind, werden auch Störgrößen des Prismas P, wie Reflexionen, Dämpfung, Alterung, Verschmutzung, Fremdlicht usw., von den RGB-Sensoren S erfasst. Dies ermöglicht eine bessere Kalibrierung des Lichtstrahles und liefert Informationen über den Zustand der optischen Einheit O. Durch den Einsatz von zwei unabhängigen RGB-Sensoren S können genauere Informationen ermittelt werden und die Möglichkeit für Fehlmessungen wird minimiert.

Durch die zentrale Auswertung der Messdaten aus unterschiedlichen / benachbarten Feuern F können die Umwelteinflüsse separiert ermittelt werden und in die Kalibrierung, Steuerung der Feuer einfließen. Zusammen mit den Messdaten von LED-Strom und LED-Spannung und der Temperatur (ermittelt mit einem Temperatursensor ST) des jeweiligen LED Moduls LED1, LED2, .... wird die Alterung der LEDs bestimmt und nach kalibriert. Die Summe dieser Informationen erlaubt eine genaue Analyse des Zustandes der Feuer F. Es kann ermittelt werden, ob das Prisma/Linse P/L oder die LEDs LED auf dem jeweiligen LED Modul LED1, LED2, .... ausgetauscht werden müssen oder eine Verschmutzung vorhanden ist. Somit reduzieren sich Servicekosten, weil nur zielgerichtet defekte Komponenten ausgetauscht werden und nicht die komplette optische Einheit O.

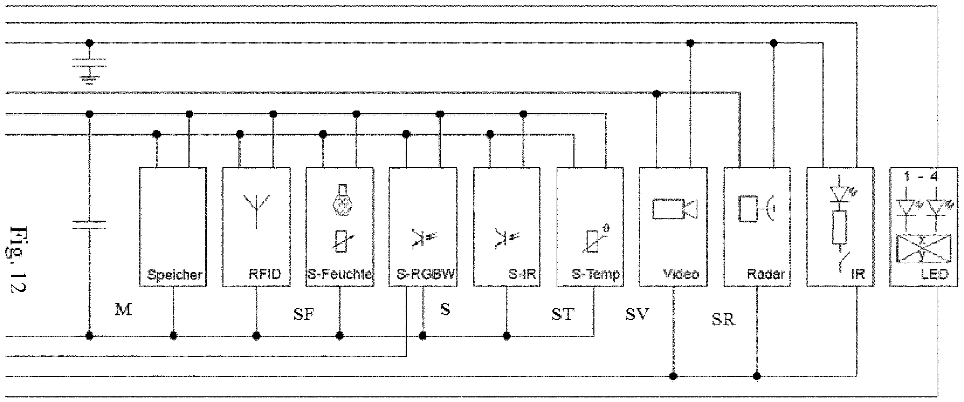

Insbesondere ist zusätzlich zu den optischen Sensoren S und dem/n Temperatursensor ST ein Feuchtigkeitssensor SF (siehe Fig. 12) auf dem jeweiligen LED Modul LED1, LED2, .... vorhanden. Dieser ermöglicht eventuell eindringende Feuchtigkeit bzw. Flüssigkeiten zu detektieren.

Weiterhin kann - wie in Fig. 12 dargestellt - das jeweilige LED Modul LED1, LED2, .... mit einem Videosensor SV und/oder einem Radarsensor SR ausgestattet werden. Diese ermöglichen ein gezieltes Überwachen des Flugfeldes.

Über einen RFID Controller und eine in das Optische Modul O integrierte Antenne A, insbesondere eine RFID - Antenne, können die Betriebs-Daten und Service-Daten des Unterflurfeuers F vor Ort ohne öffnen des Feuers F, sowie im Aus-Zustand oder ohne elektrische Verbindung zum Feuer F ausgelesen werden. Vorzugsweise kann die drahtlose Kommunikation über andere Funkstandards (z.B. Bluetooth, siehe auch die nicht vorveröffentlichte Anmeldung DE 10 2016 011 815.6 der Anmelderin) erfolgen.

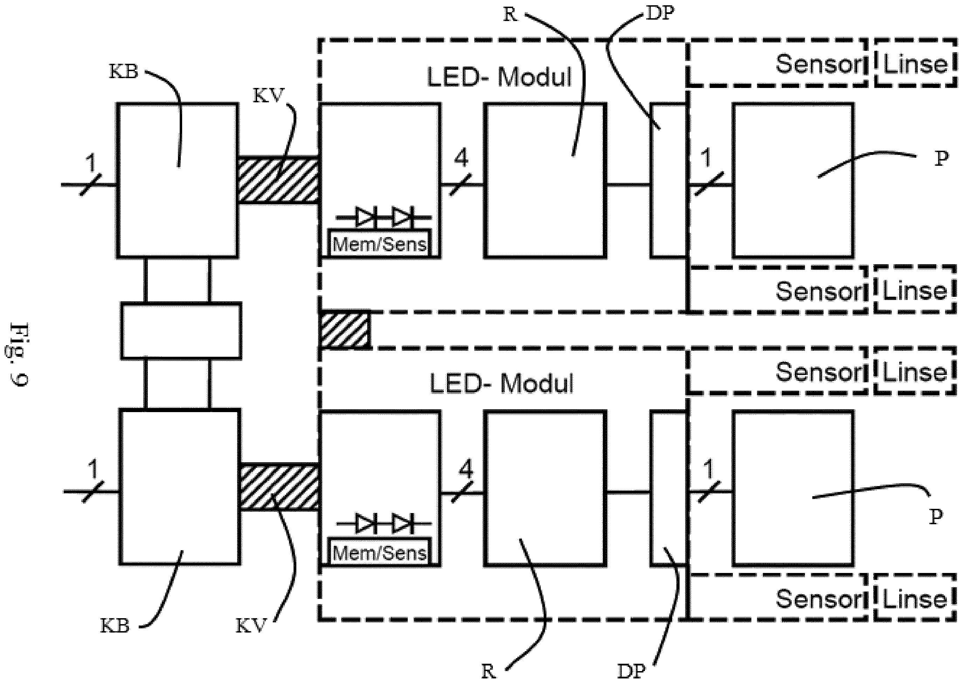

Die Ausführungsform/Konfiguration des jeweilige LED Modul LED1, LED2, .... sowie die Betriebs-Daten und Service-Daten werden in einem nichtflüchtigen Speicher M (siehe FIG. 9, Fig. 12) zum Auslesen vorgehalten.

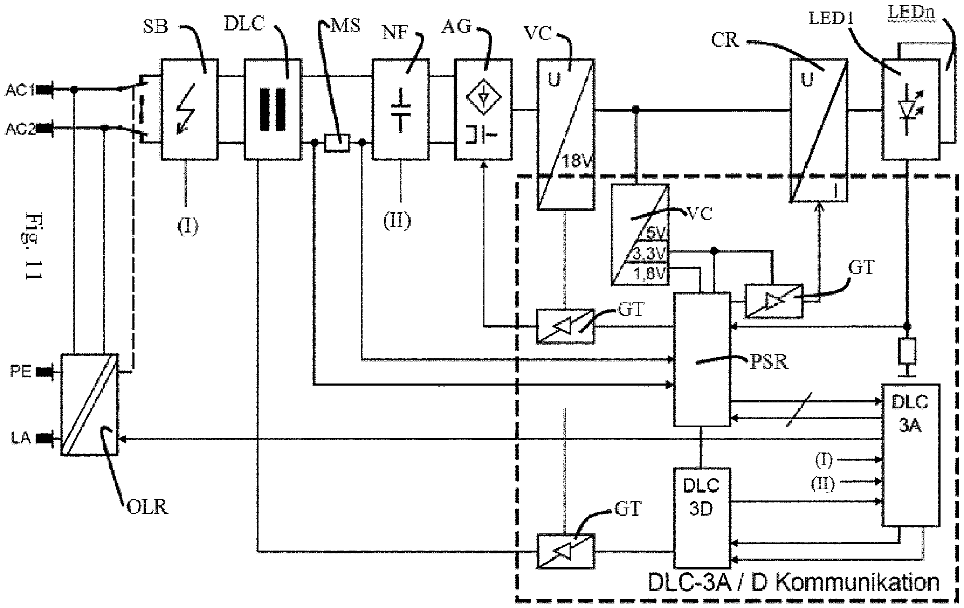

Wie im Einzelnen in Fig. 11 dargestellt ist, wird die erfindungsgemäße Vorrichtung/das Unterflurfeuer F mit genormten PLUG-CLASS A Steckern über ein DLC-Modul DLC, vorzugsweise Trenntrafo, am Serienkreis angeschlossen. Der Serienkreis wird von einer in der Zeichnung nicht dargestellten Regeleinrichtung CCR (Constant Current Regulator) versorgt. Zwischen der Regeleinrichtung CCR und dem Serienkreis wird eine in der Zeichnung nicht dargestellten MCU (Master Control Unit) angeschlossen, welche die Kommunikationssignale in Serienkreis einkoppelt.

Das in Fig. 11 dargestellte Blockschaltbild zum Blitzschutz, Spannungsversorgung und Kommunikation der erfindungsgemäßen Vorrichtung wird kurz beschrieben. Eine Überspannungs- und Überstromschutzschaltung (Lightning Protection) SB ist ein eingangsseitiger Grobschutz, welcher am Eingang des Gerätes auftretende Überspannungen und Überströme kurzschließt und dadurch Schäden am Gerät verhindert. Die Funktionsfähigkeit des Schaltungsteils wird von einer Monitoringschaltung überwacht und an einen zentralen Controllerbaustein DLC-3A gemeldet. Ein am Ausgang der Überspannungs- und Überstromschutzschaltung (Lightning Protection) SB angeschlossenes Modul DLC sorgt für die Einkopplung und Auskopplung der Powerline Kommunikationssignale auf das Versorgungsnetz. Ein mit dem Modul DLC verbundener Messshunt MS dient zur Messung des Eingangsstroms des Gerätes. Mit dem Messsignal steuert und regelt ein PS-Regulator PSR die internen Spannungsversorgungen des Gerätes.

Weiterhin ist mit dem Modul DLC ein Filter F verbunden, welches den Netzfilter des Gerätes darstellt. Der Netzfilter F erfüllt folgende Aufgaben.

Die erste Aufgabe ist die Entstörung des Netzes von internen Schaltstörungen des Betriebsgerät.

Die zweite Aufgabe ist die Darstellung eines hochimpedanten Abschluss für die Powerline Kommunikation.

Die dritte Aufgabe ist die Faltung der Energieimpulse bei Blitzeinschlag Ereignissen.

Mit dem Netzfilter F ist ein aktiver Gleichrichter (Active Rectifier) AG verbunden, welcher aus der eingangsseitigen Wechselspannung / Wechselstrom eine Gleichspannung erzeugt. Dies wird durch eine aktive Ansteuerung von Schaltern (MosFet) erreicht. Die Ansteuerung des aktiven Gleichrichters AG erfolgt durch den PS Regulator PSR.

Durch den niedrigeren Spannungsabfall der Schalter im Gegensatz zu passiven Gleichrichterdioden wird eine niedrigere Verlustleistung des Gerätes erreicht.

Mit dem Ausgang des aktiven Gleichrichters AG ist ein Spannungskonverter (Voltage Converter) VC verbunden, welcher aus der gleichgerichteten Spannung die Versorgungsspannungen für die geräteinternen aktiven Komponenten (DLC-3A, DLC-3D usw.) erzeugt. Die Erzeugung erfolgt zweistufig. Aus der gleichgerichteten Spannung wird eine Gleichspannung erzeugt (z.B. 18V). Aus dieser Spannung werden die niedrigeren Spannungen (5V, 3,3V und 1,8V) erzeugt.

Für die Ansteuerung des Spannungskonverters VC wird der PS-Regulator PSR verwendet.

Mit dem Ausgang des Spannungskonverters VC ist eine Konstantstromregelung (Current Regulator) CR verbunden, welche die erzeugte Gleichspannung (z.B. 18V) in einen geregelten konstanten Strom umsetzt. Dieser ist für eine Ansteuerung der nachfolgenden LED - Ketten notwendig. Die Ansteuerung erfolgt über den PS-Regulator PSR.

An die Konstantstromregelung (Current Regulator) CR sind die LED-Module LED1, LED2, .. angeschlossen, welche die LED - Ketten des Gerätes darstellen. Mit dem Gerät können mehrere LED - Ketten unabhängig voneinander angesteuert und geregelt werden. Eine LED - Kette kann aus mehreren in Reihe geschalteten LEDs bestehen.

Der PS-Regulator PSR steuert und regelt, wie oben beschrieben, die verschiedenen Schaltungsteile der erfindungsgemäßen Vorrichtung. Hierzu werden die verschiedenen Systemparameter (Eingangsstrom, Ausgangsstrom, Gleichspannungen usw.) vom PS-Regulator PSR gemessen und in die entsprechenden Ansteuersignale umgerechnet.

Der mit dem PS-Regulator PSR verbundene zentrale Controllerbaustein DLC-3A des Gerätes überwacht die Funktionen des Gerätes und ist für den Powerline Empfang zuständig. Weiterhin ist mit dem PS-Regulator PSR und dem zentralen Controllerbaustein DLC-3A ein Powerline Verstärker DLC-3D verbunden.

Am Ausgang des Powerline Verstärker DLC-3D und des PS-Regulator PSR angeschlossene Gatetreiber GT setzen die Ansteuersignale mit einem niedrigen Spannungspegel in Ansteuersignale mit einem höheren Spannungspegel um. Die höhere Spannung ist für die Ansteuerung von aktiven Komponenten (MosFet) notwendig.

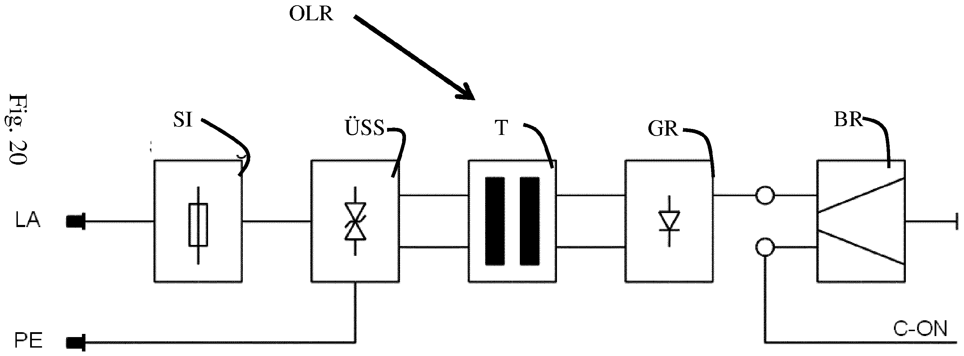

Durch die gestrichelte Line in Fig. 11 soll die Integration der innerhalb dieser Line liegenden Komponenten im DLC-3A/D dargestellt werden. Mit (I) ist der Anschluss der Überspannungs- und Überstromschutzschaltung (Lightning Protection) SB und mit (II) ist der Anschluss des Netzfilters NF an den zentralen Controllerbaustein DLC-3A bezeichnet. Am Eingang der Überspannungs- und Überstromschutzschaltung (Lightning Protection) SB ist ein Kurzschlussschalter (open lamp relais) OLR angeordnet, dessen Funktionsweise anhand des in Fig. 20 dargestellten Blockschaltbilds näher erläutert wird.

Der DLC-3A/D (siehe strichlinierter Block in Fig. 11 sowie die nicht vorveröffentlichte Anmeldung DE 10 2016 011 815.6 der Anmelderin) ist die zentrale Regel-, Steuer-, Überwachungs- und Kommunikationseinheit der Kontrollelektronik KE. Die Kontrollelektronik KE regelt den benötigten LED Vorwärtsstrom der bis zu vier unabhängigen LED-Ketten. Die Kontrollelektronik KE überwacht über im DLC-3A/D integrierte AD- Wandler den Eingangsstrom, die Eingangsspannung, den LED Strom, die LED Spannung sowie die Versorgungsspannung der Elektronik. Ebenso werden alle Sensor-Daten vom DLC-3A/D (ASIC) gelesen, überwacht und ausgewertet. Über eine Powerline-Kommunikation PLC kann die erfindungsgemäße Vorrichtung/das Unterflurfeuer F diese Informationen (Sensor Daten) sowie Status-Meldungen an die zentralen und übergeordneten Einheiten liefern (im Einzelnen siehe die nicht vorveröffentlichte Anmeldung DE 10 2016 011 815.6 der Anmelderin).

Auf einem Kontrollelektronik-Board KB sind, wie in Fig.11 dargestellt, ein Netzfilter NF und eine Überspannungs- und Überstromschutzschaltung (Lightning Protection) SB implementiert. Zur Implementierung siehe im Einzelnen die nicht vorveröffentlichte Anmeldung DE 10 2016 011 815.6 der Anmelderin.

Der Netzfilter NF ist als LC -Tiefpassfilter ausgelegt. Die Überspannungs- und Überstromschutzschaltung SB besteht aus:
- Grobschutz
- Strom- und Spannungsbegrenzungsschaltung
- Feinschutz

Die Kombination aus Netzfilter NF und Surge und Burst Protection SB bietet einen Schutz gegen elektrische Umwelteinflüsse, wie Überstrom,- Spannungen und Blitzschläge. Für eine hohe Verfügbarkeit des Systems wird diese Schutzeinrichtung vom DLC-3A/D (ASIC) überwacht. Damit wird erreicht, dass ein Ausfall des Schutzes ohne Zeitverzögerung erkannt wird. Mögliche Reaktionen sind die Umschaltung in den Redundanz Mode oder das Feuer F entsprechend zu reparieren oder zu tauschen, bevor eine Schädigung des Feuers Fund damit ein Ausfall des Systems eintritt.

Die Kontrollelektronik KE enthält eine automatische Heizungsvorrichtung, um die Baugruppe beim Kaltstart auf die für Bauteile benötigte Minimal-Temperatur vorzuwärmen. Die Heizleistung liegt insbesondere bei 10 Watt für Kontrollelektronik KE und 10 Watt für das jeweilige LED Modul LED1, LED2, ...., d.h. 20 Watt für die Vorrichtung/das Unterflurfeuer F in Minimalausstattung. Dies erhöht die Starttemperatur des Feuers F (z.B. bei Quarzen, die relativ großes Frequenzoffset Drift über Temperatur aufweisen) sowie die Verfügbarkeit und Lebensdauer des Feuers F.

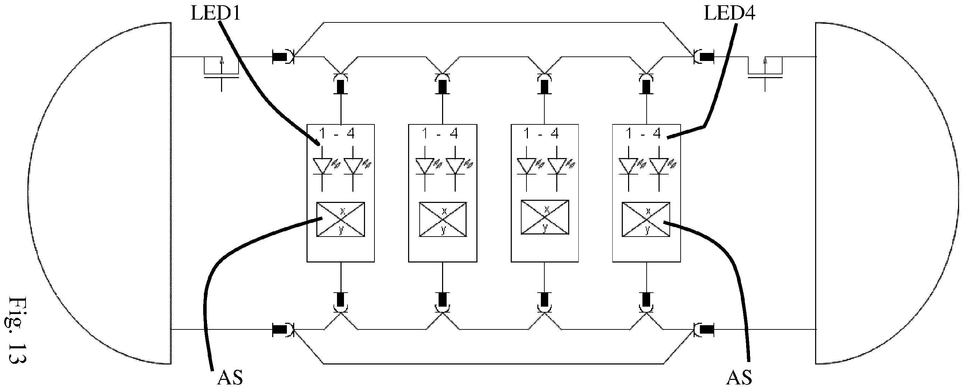

Wie bereits oben ausgeführt, ist es möglich die erfindungsgemäße Vorrichtung/das Unterflurfeuer F mit einer redundanten Kontrollelektronik KE aufzubauen, siehe Fig. 13. Hierfür sind zwei Kontrollelektronik Boards KB nötigt. Jedes Kontrollboard KB wird über einen separaten Trenntrafo T an den Serienkreis angeschlossen. Sollte es zu einem Fehler in der internen Stromversorgung des Stromreglers für das jeweilige LED-Modul LED1, LED2, .... oder zu einem Ausfall einer oder mehrerer LEDs in den jeweiligen LED-Ketten von LED Modul LED1, LED2, ... bei einfarbigen Dots kommen, wird der Redundanz Mode gestartet.

Es gibt drei Redundanz Mode Konfigurationen:
1. Bei einem Ausfall der Stromversorgung eines Kontrollboards KB werden die Stromversorgung und die Kommunikation vom verbleibenden Kontrollboard KB übernommen. Hierdurch kann das erste Kontrollboard KB weiterhin die angeschlossenen LED-Ketten betreiben.
2. Bei einem Ausfall eines Stromreglers für die LED-Ketten kann das zweite Kontrollboard KB bis zu zwei LED-Ketten des ersten Kontrollboards KB übernehmen.
3. Bei einem Ausfall einer oder mehrerer LEDs in einer LED-Kette kann dieser unter Verwendung von LED-Modulen mit einfarbigen Dots durch eine oder mehrere redundante LED-Ketten kompensiert werden.

Der integrierte DLC-3A/D (ASIC) übernimmt neben der Powerline Communication PLC alle Steuer-, Regelungs- sowie Diagnose - Aufgaben der erfindungsgemäßen Vorrichtung/des Unterflurfeuers F. Durch eine entsprechende Konfiguration mittels Software kann die Kontrollelektronik KE in Verbindung mit den Optischen Einheiten O die unterschiedlichen Varianten (Funktionen) ermöglichen (z.B. Taxiway Centre line light oder Flashlight).

Durch das am Eingang der Überspannungs- und Überstromschutzschaltung (Lightning Protection) SB angeordnete Relais BR wird das Unterflurfeuer F vom Serienkreis getrennt. Durch die Trennung wird ein zusätzlicher Schutz des Unterflurfeuers F vor z.B. Überstrom, Überspannung im beschriebenen Fall erreicht.

Bei einer anderen Ausprägung wird mit dem Relais BR kein offener Sekundärkreis am Trafo T nachgebildet, sondern der Serienkreis wird über die Relaiskontakte am Eingang des Unterflurfeuers F kurzgeschlossen.

Dieser Kurzschluss bewirkt, dass das gesamte System (Serienkreis) weniger Leistung für die Befeuerung bereitstellen muss. Der CCR wird weniger stark belastet.

Durch den Kurzschluss wird das Unterflurfeuer F dennoch vom Serienkreis getrennt. Mit dem Kurzschluss wird ebenfalls erreicht, dass am Eingang des Unterflurfeuers F keine Spannung ansteht.

Die Funktionalität der externen Messeinrichtung wird hierbei nicht mehr aufrechterhalten.

Für beide Ausprägungen kann das Relais BR durch einen manuellen Eingriff (Anlegen einer Spannung an PE (Erde)und LA) zurückgesetzt werden. Damit kann das Unterflurfeuer F (wenn dieses funktionsfähig ist) wieder im normalen Betrieb eingesetzt werden. Die Steuerleitung des bistabilen Relais BR ist mit C-ON bezeichnet.

Wie das Blockschaltbild gemäß Fig. 20 zeigt, ist ein Eingang LA zur Zurücksetzung des bistabilen Relais BR mit einer Sicherung SI vor Überströmen geschützt. Überspannungen zwischen den Eingängen LA und PE werden durch eine Überspannungsschutzschaltung ÜSS begrenzt.

Die angelegte Spannung wird mit einem Trafo T, welcher zwischen der Überspannungsschutzschaltung ÜSS und einer Gleichrichterschaltung GR angeordnet ist, galvanisch getrennt übertragen. Mit dieser übertragenen Spannung wird das bistabile Relais BR angesteuert und dadurch zurückgesetzt.

Die integrierte und intelligente Sensorik (RGB-Sensor S, Feuchtigkeitssensor SF, Radarsensor SR, Temperatursensor ST, Videosensor SV) liefert vielfältige dezentrale Informationen, die eine selbstständige Überwachung, Fehlererkennung und Kalibrierung ermöglichen, zusätzlich werden parallel die Informationen für die zentrale Auswertung und Überwachung abgeleitet. Durch den Einsatz der Sensorik wird ebenfalls die Vielzahl der Variationen in der Fertigung reduziert, sowie der Wartungsaufwand und die Wartungskosten gesenkt.

Zudem ermöglicht die erfindungsgemäße Vorrichtung / das Unterflurfeuer F den Einsatz in Serienkreisen ohne Kommunikation bei gleichzeitiger Aufrechterhaltung der korrekten Funktionalität externer Messeinrichtungen in der Stromversorgung durch Nachbildung (Emulation) des Fehlerbildes (offener Sekundärkreis vom Trafo) defekter Halogen-Leuchtmittel mittels Relais am Eingang und entsprechender Logik zur Steuerung des Relais beim Einschalten des Serienstromkreises.

### Bezugszeichenliste:

- A: Antenne (RFID-Antenne)
- AF: Austrittsfenster der Linse L
- AG: aktiver Gleichrichter (Active Rectifier)
- AS: Auswahlschalter
- B: Buchse (für Kabelverbindung KV)
- BP1: erster Brennpunkt der Linse L
- BP1: zweiter Brennpunkt der Linse L
- BR: bistabiles Relais
- CR: Konstantstromregelung (Current Regulator)
- D1: Dichtungsring (O-Ring) für zylindrischen Einsatz ZE
- DT: Dot 0, Dot 1, Dot 2, Dot 3, ...
- DLC: DLC-Modul
- DLC-3A: zentraler Controllerbaustein
- DLC-3D: Powerline Verstärker
- DP: Dichtung Prisma
- E: Erdbodengleiche
- EF: Eintrittsfenster der Linse L
- F: Feuer (Unterflurfeuer)
- G: Gehäuse
- GD: Gehäuse-Deckel
- GB: Gehäuse-Boden
- GF: Lichtdurchtrittsöffnung
- GR: Gleichrichterschaltung
- GT: Gatetreiber
- I: Isolier- und Wärmeleitfolie
- IR: IR-LED (Kommunikation, Heizung)
- KE: Kontrollelektronik
- KV: Kabelverbindung
- KB: Kontrollelektronik-Board
- K1: erste Kammer (optische Elemente LED)
- K2: zweite Kammer (Kontrollelektronik KE, Kabelverbindungen KV)
- L: Linse
- LED: optisches Element
- LED1: LED-Modul
- LED2: LED-Modul
- LED3: LED-Modul
- LED4: LED-Modul
- LA: Eingang open lamp relais OLR
- LP: LED-Leiterplatte
- M: Speicher (Konfiguration, Betriebs-Daten, Service-Daten)
- MS: Messshunt
- NF: Netzfilter
- O: optische Einheit
- OF: Optisches Fenster
- OLR: Kurzschlussschalter (open lamp relais)
- P: Prisma
- P1: Positionierung (Passstift PS) zwischen Reflektor und LED-Modul und Gehäusedeckel
- P2: Bohrung für Verschraubung Reflektor und LED-Modul mit Gehäusedeckel
- P3: Bohrung für Verschraubung Reflektor mit LED-Modul
- PE: Erde (Eingang open lamp relais OLR)
- PR: Passstifte mit Stufung des Reflektors R
- PS: Passstifte des Sensors S
- PSR: PS-Regulator
- R: Reflektor
- RF1: erste Reflektorfläche der Linse L
- RF1: zweite Reflektorfläche der Linse L
- S: Sensor (RGB-Sensor)
- SI: Sicherung
- S1: Schrauben für die Verschraubung Reflektor mit LED-Modul
- S2: Schrauben für die Verschraubung Reflektor und LED-Modul mit Gehäusedeckel
- S3: Schrauben für die Verschraubung Reflektor und LED-Modul mit Gehäusedeckel
- S4: Schrauben für die Verschraubung Kontrollelektronik-Board mit Gehäuse-Boden
- S5: Schrauben für die Verschraubung Gehäuse-Boden mit Gehäuse-Deckel
- SF: Feuchtigkeitssensor
- SR: Radarsensor
- ST: Temperatursensor
- SV: Videosensor
- SB: Überspannungs- und Überstromschutzschaltung
- T: Trafo (Übertrager)
- VC: Spannungskonverter (Voltage Converter)
- W: Flachdichtung (zweite Kammer K2)
- ZE: zylindrischer Einsatz

## Patentansprüche

1. Vorrichtung zur Befeuerung der Start- und Landebahnen sowie der Taxiway an Flughäfen mit einer Vielzahl von Feuern (F), welche jeweils einen Gehäuse-Deckel (GD) mit einer Lichtdurchtrittsöffnung (GF), als Lichtquelle mindestens eine lichtemittierende Diode (LED) und ein komplementär zur Form der Lichtdurchtrittsöffnung (GF) ausgestaltetes Prisma (P) als Optik und einen zwischen Gehäuse-Deckel (GD) und einem daran befestigten Einsatz (ZE) angeordneten Dichtungsring (D1) aufweist, wobei an der Unterseite des Gehäuse-Deckels (GD) des Feuers (F) eine erste Kammer (K1) und eine zweite Kammer (K2) angeordnet sind und die beiden Kammern (K1, K2) durch eine bei Einbau über die Erdbodengleiche (E) herausragende optische Einheit (O), umfassend mindestens ein LED-Modul (LED1) mit einer Anzahl von LED-Ketten (DT) mit jeweils mehreren lichtemittierenden Dioden (LED) als Lichtquelle, ein mit einer Kontrollelektronik (KE) verbundener Auswahlschalter (AS) für eine LED-Kettenansteuerung auf dem jeweiligen LED-Modul (LED1, LED2, ....) und einen Reflektor (R), getrennt sind, und mittels einer zwischen dem Reflektor (R) und dem Gehäuse-Deckel angeordneten, auf der Unterseite des Gehäuse-Deckels (GD) eingelegten flexiblen Isolier- und Wärmeleitfolie (I) eine Abdichtung zwischen der ersten Kammer (K1) und der zweiten Kammer (K2) des Feuers (F) erfolgt.

2. Vorrichtung nach Anspruch 1, wobei für die Positionierung der optischen Einheit (O) auf der Unterseite des Gehäuse-Deckels (GD) Passstifte (PR) mit Stufungen vorgesehen sind, welche bis in Positionsbohrungen (P1) des Gehäuse-Deckels (GD) reichen und mittels erster Schrauben (S1) der Reflektor (R) an dem LED-Modul (LED1) befestigt ist, die optische Einheit (O) an der Unterseite des Gehäuse-Deckels (GD) mittels zweiter und dritter Schrauben (S2, S3), welche durch das jeweilige LED Modul (LED1, LED2, ....) samt einer LED-Leiterplatte (LP), den Reflektor (R) und die Isolierfolie (I) gehen, befestigt ist, und der Reflektor (R) so geformt ist, dass bei Verschraubung eine Dichtung (DP) für das in der Lichtdurchtrittsöffnung angeordnete Prisma (P) gegen die innenliegende Kante der Lichtdurchtrittsöffnung (GF) des Unterflurfeuers (F) gedrückt wird.

3. Vorrichtung nach Anspruch 1 oder 2, wobei die zweite Kammer (K2), welche von einem nach oben hin offenen Gehäuse-Boden (GB) gebildet ist und mindestens eine Kontrollelektronik (KE) sowie Kabelverbindungen (KV) enthält, mittels einer an der Stirnseite des Gehäuse-Boden (GB) angeordneten Flachdichtung (W), welche mittels fünfter Schrauben (S5) gegen die Unterseite des Gehäuse-Deckels (GD) drückt, abgedichtet ist.

4. Vorrichtung nach einem oder mehreren der Ansprüche 1 bis 3, wobei die optische Einheit (O) eine Linse (L) aufweist und dass zur Aufheizung von Prisma (P), Linse (L) und Kontrollelektronik (KE) das mindestens eine LED-Modul (LED1, LED2, ....) zusätzliche IR - LEDs (IR) mit Vorwiderständen aufweist.

5. Vorrichtung nach einem oder mehreren der Ansprüche 1 bis 4, wobei die IR - LEDs (IR) auch als Sender im IR-Bereich verwendet werden und dass mindestens ein auf dem mindestens einen LED Modul (LED1, LED2, ....) angeordneter Sensor (S) als Kommunikationsempfänger dient.

6. Vorrichtung nach einem oder mehreren der Ansprüche 1 bis 5, wobei Lichtstrahlen, welche von mindestens dem mindestens einen LED-Modul (LED 1) ausgehen, an den Rändern des Strahlengangs der Linse (L) gesammelt werden und von mindestens einem Sensor (S) das so empfangene Streulicht zur Überwachung sowohl der Lichtintensität als auch der Lichtwellenlänge genutzt wird.

7. Vorrichtung nach einem oder mehreren der Ansprüche 1 bis 6, wobei die Linse (L) in einer Ausnehmung an der Oberseite des Gehäuse-Deckels (GD) des Feuers (F) dichtend angeordnet ist, und wobei Streulichtstrahlen, die vom Feuer (F) abgestrahlt werden, auf ein Eintrittsfenster (EF) der Linse (L) treffen, die Linse (L) die auftreffenden Streulichtstrahlen in einem ersten Brennpunkt (BP1) bündelt, vom ersten Brennpunkt (BP1) mittels einer ersten Reflektorfläche (RF1) der Linse (L) die Lichtstrahlen auf eine zweite Reflektorfläche (RF2) mit einem zweiten Brennpunkt (BP2) der Linse (L) auf die Sensorfläche des mindestens einen Sensors (S) reflektiert werden und alle Flächen (RF1, RF2) der Linse (L), mit Ausnahme des Eintrittsfensters (EF) und eines Austrittsfensters (AF) zum Sensor (S), verspiegelt sind.

8. Vorrichtung nach einem oder mehreren der Ansprüche 1 bis 7, wobei die Sensoren (S) jeweils in einem sich länglich erstreckenden Teil einer Leiterplatte (LP) angeordnet sind und das Teil eine Bohrung (ZS) für einen Zentrierstift aufweist.

9. Vorrichtung nach einem oder mehreren der Ansprüche 1 bis 8, wobei Dots (DT), welche mehrere LEDs aufweisen, auf dem mindestens einen LED Modul (LED1, LED2, ...) sowohl zur Abstrahlung von einfarbigen als auch mehrfarbigen (Rot-Grün-Blau-Weiß) Licht vorgesehen sind.

10. Vorrichtung nach einem oder mehreren der Ansprüche 1 bis 9, wobei aus LEDs gebildete LED-Ketten des mindestens einen LED-Moduls (LED1, LED2, ...) durch entsprechende Ansteuerung der Dots (DT) von der Kontrollelektronik (KE) sowohl als Geradenlicht als auch als Kurvenlicht entlang der Geraden und Kurven der Start- und Landebahnen sowie der Taxiway eingesetzt werden.

11. Vorrichtung nach einem oder mehreren der Ansprüche 1 bis 10, wobei redundante LED-Ketten auf dem mindestens einen LED-Modul (LED1, LED2, ...) angeordnet sind, welche durch eine oder mehrere Kontrollelektroniken (KE) redundant angesteuert werden.

12. Vorrichtung nach einem oder mehreren der Ansprüche 1 bis 11, wobei das Feuer als Unterflurfeuer (F) mit einer redundanten Kontrollelektronik (KE) und umschaltbaren und/oder redundanten Stromversorgung aufgebaut ist.

13. Vorrichtung nach einem oder mehreren der Ansprüche 1 bis 12, wobei zur Emulation einer Halogenlampe das Unterflurfeuer (F) ein Relais zur Öffnung des Sekundärkreises eines im Serienstromkreis der Befeuerung liegenden Trafos (T) aufweist.

14. Vorrichtung nach einem oder mehreren der Ansprüche 1 bis 13, wobei das Unterflurfeuer (F) zusätzlich einen Temperatursensor (ST) und/oder einen Feuchtigkeitssensor (SF) und/oder einen Radarsensor (SR) und/oder einen Videosensor (SV) aufweist.

## Claims

1. Device for lighting runways and taxiways at airports with a large number of fires (F), each of which has a housing cover (GD) with a light passage opening (GF), as light source at least one light-emitting diode (LED) and as optics a prism (P) complementary designed to the shape of the light passage opening (GF) and has a sealing ring (D1) arranged between the housing cover (GD) and an insert (ZE) attached to it, wherein at the underside of the housing cover (GD) of the fire (F), a first chamber (K1) and a second chamber (K2) are arranged and the two chambers (K1, K2) are provided with an optical unit (O) that protrudes above ground level (E) when installed, comprising at least one LED Module (LED1) with a number of LED chains (DT), each with several light-emitting diodes (LED) as a light source, a selection switch (AS) connected to control electronics (KE) for LED chain control on the respective LED module (LED1 , LED2, ....) and a reflector (R), are separated and by means of a flexible insulating and heat-conducting film (I) arranged between the reflector (R) and the housing cover and inserted on the underside of the housing cover (GD) a seal occurs between the first chamber (K1) and the second chamber (K2) of the fire (F).

2. Device according to claim 1, wherein for positioning the optical unit (O) on the underside of the housing cover (GD) dowel pins (PR) with steps are provided, which extend into positioning holes (P1) in the housing cover (GD) and the reflector (R) is attached to the LED module (LED1) by means of first screws (S1), the optical unit (O) is attached to the underside of the housing cover (GD) by means of second and third screws (S2, S3), which through the respective LED module (LED1, LED2, ....) including an LED circuit board (LP), the reflector (R) and the insulating film (I), is attached, and the reflector (R) is shaped so that by screw connection a seal (DP) for the prism (P) arranged in the light passage opening is pressed against the inner edge of the light passage opening (GF) of the underfloor fire (F).

3. Device according to claim 1 or 2, wherein the second chamber (K2), which is formed by a housing base (GB) that is open at the top and contains at least one control electronics (KE) and cable connections (KV), by means of a flat gasket (W) arranged on the front side of the housing base (GB), which presses against the underside of the housing cover (GD) by means of fifth screws (S5), is sealed.

4. Device according to one or more of claims 1 to 3, wherein the optical unit (O) has a lens (L) and that the at least one LED Module (LED1, LED2, ....) for heating the prism (P), lens (L) and control electronics (KE) has additional IR LEDs (IR) with series resistors.

5. Device according to one or more of claims 1 to 4, wherein the IR LEDs (IR) are also used as transmitters in the IR range and that at least one sensor (S) arranged at least one of the LED Module (LED1, LED2, ....) serves as a communication receiver.

6. Device according to one or more of claims 1 to 5, wherein light rays emanating from at least the at least one LED module (LED1) are collected at the edges of the beam path of the lens (L) and from at least one sensor (S) received scattered light is used to monitor both the light intensity and the light wavelength.

7. Device according to one or more of claims 1 to 6, wherein the lens (L) is arranged sealing in a recess on the top of the housing cover (GD) of the fire (F), and wherein scattered light rays from the fire (F) are emitted and hit on an entrance window (EF) of the lens (L), the lens (L) concentrates the incident scattered light rays in a first focal point (BP1), from the first focal point (BP1) by means of a first reflector surface (RF1) of the lens (L) the light rays are reflected onto a second reflector surface (RF2) with a second focal point (BP2) of the lens (L) onto the sensor surface of the at least one sensor (S) and all surfaces (RF1, RF2) of the lens (L), with except of the entry window (EF) and an exit window (AF) to the sensor (S), are mirrored.

8. Device according to one or more of claims 1 to 7, wherein the sensors (S) are each arranged in an elongated part of a circuit board (LP) and the part has a hole (ZS) for a centering pin.

9. Device according to one or more of claims 1 to 8, wherein dots (DT), which have several LEDs, are provided on the at least one LED module (LED1, LED2, ...) for emitting both single-color and multi-color (red-green-blue-white) light.

10. Device according to one or more of claims 1 to 9, wherein LED chains formed from LEDs of the at least one LED module (LED1, LED2, ...) by appropriate control of the dots (DT) from the control electronics (KE) both as straight light as well as cornering lights along the straights and curves of the runways and taxiways are used.

11. Device according to one or more of claims 1 to 10, wherein redundant LED chains are arranged on the at least one LED module (LED1, LED2, ...), which are redundantly controlled by one or more control electronics (KE).

12. Device according to one or more of claims 1 to 11, wherein the fire is constructed as an underfloor fire (F) with redundant control electronics (KE) and switchable and / or redundant power supply.

13. Device according to one or more of claims 1 to 12, wherein to emulate a halogen lamp, the underfloor light (F) has a relay for opening the secondary circuit of a transformer (T) located in the series circuit of the lighting.

14. Device according to one or more of claims 1 to 13, wherein the underfloor light (F) additionally has a temperature sensor (ST) and/or a humidity sensor (SF) and/or a radar sensor (SR) and/or a video sensor (SV).

## Revendications

1. Dispositif pour l'éclairage de pistes d'atterrissage et de voies de circulation dans des aéroports avec un grand nombre d'incendies (F), comportant chacun un couvercle de boîtier (GD) avec une ouverture de passage de lumière (GF), comme source de lumière au moins une diode électroluminescente (LED) et comme optique, un prisme (P) complémentaire à la forme de l'ouverture de passage de lumière (GF) et comportant une bague d'étanchéité (D1) disposée entre le couvercle du boîtier (GD) et un insert (ZE) qui lui est fixé, dans lequel sur la face inférieure du couvercle du boîtier (GD) du feu (F), une première chambre (K1) et une deuxième chambre (K2) sont disposées et les deux chambres (K1, K2) sont dotées d'une unité optique (O), qui dépasse au-dessus du niveau du sol (E) une fois installé, comprenant au moins un module LED (LED1) avec plusieurs chaînes LED (DT), chacune avec plusieurs diodes électroluminescentes (LED) comme source lumineuse, un commutateur de sélection (AS) reliés à l'électronique de commande (KE) pour la commande de la chaîne LED sur le module LED respectif (LED1, LED2, ....) et à un réflecteur (R), sont séparés et au moyen d'un film flexible isolant et thermo conducteur (I) disposé entre le réflecteur (R) et le couvercle du boîtier et inséré sur la face inférieure du couvercle du boîtier (GD), une étanchéité se produit entre la première chambre (K1) et la deuxième chambre (K2) du feu (F).

2. Dispositif selon la revendication 1, dans lequel pour positionner l'unité optique (O) sur la face inférieure du couvercle du boîtier (GD), il est prévu des goujons (PR) avec marches qui s'étendent dans des trous de positionnement (P1) dans le couvercle du boîtier (GD) et le réflecteur (R) est fixé au module LED (LED1) au moyen de premières vis (S1), l'unité optique (O) est fixée sur la face inférieure du couvercle du boîtier (GD) au moyen de deuxième et troisième vis (S2, S3), qui est fixé à travers le module LED respectif (LED1, LED2, ....) comprenant une carte de circuit imprimé LED (LP), le réflecteur (R) et le film isolant (I), et le réflecteur (R) est conformé de telle sorte que, par vissage, un joint (DP) pour le prisme (P) disposé dans l'ouverture de passage de lumière est pressé contre le bord intérieur de l'ouverture de passage de lumière (GF) du feu (F).

3. Dispositif selon la revendication 1 ou 2, dans lequel la deuxième chambre (K2), qui est formée par un fond de boîtier (GB) ouvert vers le haut et contient au moins une électronique de commande (KE) et des connexions par câble (KV), par l'étanchéité est réalisée au moyen d'un joint plat (W) disposé sur la face avant du fond du boîtier (GB), qui est pressé contre la face inférieure du couvercle du boîtier (GD) au moyen de cinquièmes vis (S5).

4. Dispositif selon une ou plusieurs des revendications 1 à 3, dans lequel l'unité optique (O) comporte une lentille (L) et que le au moins un module LED (LED1, LED2, ....) pour chauffer le prisme (P), la lentille (L) et l'électronique de commande (KE) sont dotés de LED IR supplémentaires (IR) avec des résistances en série.

5. Dispositif selon une ou plusieurs des revendications 1 à 4, dans lequel les LED IR (IR) sont également utilisées comme émetteurs dans la plage IR et en ce qu'au moins un capteur (S) est disposé sur au moins un des modules LED (LED1, LED2, ....) sert de récepteur de communication.

6. Dispositif selon une ou plusieurs des revendications 1 à 5, dans lequel les rayons lumineux émanant d'au moins le au moins un module LED (LED1) sont collectés aux bords du trajet optique de la lentille (L) et d'au moins un le capteur (S) reçu la lumière diffusée est utilisé pour surveiller à la fois l'intensité lumineuse et la longueur d'onde de la lumière.

7. Dispositif selon une ou plusieurs des revendications 1 à 6, dans lequel la lentille (L) est disposée de manière étanche dans un évidement sur le dessus du couvercle du boîtier (GD) du feu (F), et dans lequel les rayons lumineux diffusés du feu (F) sont émis et frappés sur une fenêtre d'entrée (EF) de la lentille (L), la lentille (L) concentre les rayons lumineux incidents diffusés dans un premier foyer (BP1), à partir du premier foyer (BP1) au moyen d'une première surface réfléchissante (RF1) de la lentille (L), les rayons lumineux sont réfléchis sur une deuxième surface réfléchissante (RF2) avec un deuxième foyer (BP2) de la lentille (L) sur la surface de capteur d'au moins un le capteur (S) et toutes les surfaces (RF1, RF2) de la lentille (L), à l'exception de la fenêtre d'entrée (EF) et d'une fenêtre de sortie (AF) vers le capteur (S), sont reflétées.

8. Dispositif selon une ou plusieurs des revendications 1 à 7, dans lequel les capteurs (S) sont disposés chacun dans une partie allongée d'une plaquette de circuit imprimé (LP) et la partie présente un trou (ZS) pour une broche de centrage.

9. Dispositif selon une ou plusieurs des revendications 1 à 8, dans lequel des points (DT), qui comportent plusieurs LED, sont prévus sur au moins un module LED (LED1, LED2, ...) pour émettre à la fois une couleur et lumière multicolore (rouge-vert-bleu-blanc).

10. Dispositif selon une ou plusieurs des revendications 1 à 9, dans lequel des chaînes de LED sont formées à partir des LED d'au moins un module LED (LED1, LED2, ...) par commande appropriée des points (DT) à partir de l'électronique de commande (KE) des feux droits ainsi que des feux de virage le long des lignes droites et des courbes des pistes et des voies de circulation sont utilisés.

11. Dispositif selon une ou plusieurs des revendications 1 à 10, dans lequel des chaînes de LED redondantes sont disposées sur au moins un module LED (LED1, LED2, ...), qui sont commandées de manière redondante par une ou plusieurs électroniques de commande (KE).

12. Dispositif selon une ou plusieurs des revendications 1 à 11, dans lequel le feu est réalisé sous forme de feu au sol (F) avec une électronique de commande (KE) redondante et une alimentation électrique commutable et/ou redondante.

13. Dispositif selon une ou plusieurs des revendications 1 à 12, dans lequel pour émuler une lampe halogène, le feu au sol (F) comporte un relais d'ouverture du circuit secondaire d'un transformateur (T) situé dans le circuit série de l'éclairage.

14. Dispositif selon une ou plusieurs des revendications 1 à 13, dans lequel le feu au sol (F) présente en outre un capteur de température (ST) et/ou un capteur d'humidité (SF) et/ou un capteur radar (SR) et/ou un capteur vidéo (SV).
